# EUROPEAN PATENT SPECIFICATION

(11) **EP 4 510 601 B1**
(45) Date of publication and mention of the grant of the patent: **28.10.2026**
(21) Application number: 23830452.1
(22) Date of filing: 29.06.2023
(51) Int. Cl.: H04N 23/54, H04N 23/57, G03B 3/10, G03B 30/00, G02B 7/04, H02K 41/02, H02K 41/035, H02K 7/08

(54) **MOTOR, CAMERA MODULE, AND ELECTRONIC DEVICE**
MOTOR, KAMERAMODUL UND ELEKTRONISCHE VORRICHTUNG
MOTEUR, MODULE DE CAMÉRA ET DISPOSITIF ÉLECTRONIQUE

(30) Priority: 01.07.2022 CN 202210775610
(43) Date of publication of application: 19.02.2025
(73) Proprietor: Huawei Technologies Co., Ltd., Shenzhen, Guangdong 518129 (CN)
(72) Inventor: CAI, Bin, Shenzhen, Guangdong 518129 (CN); SUN, Zhanli, Shenzhen, Guangdong 518129 (CN); SONG, Wentao, Shenzhen, Guangdong 518129 (CN); CAO, Zhiyu, Shenzhen, Guangdong 518129 (CN); LIU, Hongming, Shenzhen, Guangdong 518129 (CN)
(74) Representative: MERH-IP Matias Erny Reichl Hoffmann Patentanwälte PartG mbB
(86) International application number: PCT/CN2023/104143
(87) International publication number: WO 2024/002288

(56) References cited:
- WO-A1-2017/113547
- WO-A1-2021/108972
- WO-A1-2022/111263
- CN-A- 113 489 905
- CN-A- 114 488 459
- US-A1- 2015 160 426
- US-A1- 2016 334 608
- US-A1- 2021 041 658

## Description

### TECHNICAL FIELD

This application relates to the field of terminal technologies, and in particular, to a motor, a camera module, and an electronic device.

### BACKGROUND

Currently, with rapid development of the communication industry and increasing requirements for image shooting, more users pay increasing attention to image shooting performance of electronic devices. Based on this, a camera module in an electronic device is continuously updated iteratively. Specifically, the camera module includes a lens, an optical sensing component, and a motor. The motor drives the lens to move relative to the optical sensing component, to adjust a distance between the lens and the optical sensing component, so as to adjust a focal length of the camera module, and complete focusing and resetting of the camera module.

In some technical solutions, the motor uses a spring plate suspension system. In other words, the motor is a spring plate recovery motor. This type of motor causes a poor posture of the camera module and a video tremor due to a lag of spring plate recovery, finally affecting an image shooting effect and a video recording effect of the camera module. In addition, the spring plate recovery motor is restricted by a recovery capability of the spring plate, and cannot support long-stroke focusing. As a result, an application scope of the camera module is limited.

Related art is known from patent application CN 114 488 459 A (Huawei Technologies CO., LTD.) which discloses a voice-coil motor comprising two parallel sliding shafts and corresponding sliding grooves, including a V-shaped groove and a U-shaped groove, for guiding relative movement between a movable part and a fixed part, wherein a paired shaft-and-groove arrangement on each shaft is used. Related art is also known from patent application US 2021/041658 A1 (JANG YOUNG BAE [KR]) which discloses a camera module having multiple guide bars and guide grooves with protruding contact portions in order to guide movement of a mover.

### SUMMARY

Based on this, this application provides a motor, a camera module, and an electronic device. The motor includes a mover structure, a stator structure, a first sliding shaft, a second sliding shaft, and a bearing part. A first axis of the first sliding shaft is parallel to a second axis of the second sliding shaft. The first sliding shaft and the second sliding shaft are mounted on the stator structure, and the bearing part is mounted on the mover structure. Alternatively, the bearing part is mounted on the stator structure, and the first sliding shaft and the second sliding shaft are mounted on the mover structure. The bearing part is connected to the mover structure. A first sliding groove that adapts to a shape of the first sliding shaft and a second sliding groove that adapts to a shape of the second sliding shaft are disposed on the bearing part. In an assembly status, the first sliding shaft is clamped in the first sliding groove on the bearing part, to restrict motion directions of relative motion between the mover structure and the stator structure, and the second sliding shaft is clamped in the second sliding groove on the bearing part, to restrict separation of the mover structure from the stator structure.

For the motor, a principle that three points are always coplanar is used for three-point shaft-holding bearing, and a formed triangle is always unique. A four-point shaft-holding bearing solution (or a shaft-holding bearing solution of more than four points) cannot ensure that shaft-holding bearing points are always on a same plane. Therefore, a triangle formed by the four-point shaft-holding bearing may be any one of a plurality of triangles formed by any three vertices. Therefore, a stress condition of the motor of the three-point shaft-holding bearing solution is more stable. Based on this, for action points of comprehensive acting forces in different postures, a triangle formed by three-point shaft-holding bearing is more stable, and the motor always holds the shaft at three bearing points during motion. Therefore, the three-point shaft-holding bearing solution can effectively improve stability of the motor during motion, reduce a micro swing amplitude, optimize a dynamic tilt characteristic, and reduce noise of the motor.

A first aspect of this application provides a motor. The motor includes a mover structure, a stator structure, a first sliding shaft, a second sliding shaft, and a bearing part. A first axis of the first sliding shaft is parallel to a second axis of the second sliding shaft. The bearing part is connected to the mover structure, and the first sliding shaft and the second sliding shaft are connected to the stator structure. Alternatively, the bearing part is connected to the stator structure, and the first sliding shaft and the second sliding shaft are connected to the mover structure. Two first support parts that adapt to the first sliding shaft are disposed on the bearing part, and the first sliding shaft is clamped in the two first support parts, to restrict relative motion directions of the mover structure and the stator structure. One second support part that adapts to the second sliding shaft is further disposed on the bearing part, and the second sliding shaft is clamped in the second support part on the bearing part, to restrict separation of the mover structure from the stator structure.

The restricting separation of the mover structure from the stator structure means restricting relative separation of the mover structure and the stator structure, that is, maintaining the mover structure and the stator structure not to be relatively separated. For example, the mover structure supports the stator structure via a structure. For another example, the stator structure supports the mover structure via a structure. For another example, the mover structure is clamped with the stator structure via a structure. For another example, the stator structure is clamped with the mover structure via a structure. It may be understood that the foregoing connection manners of the mover structure and the stator structure are merely some examples, and any other structure that can avoid the relative separation between the mover structure and the stator structure also falls within the protection scope of this application. This is not specifically limited in this application.

For example, the bearing part is connected to the mover structure. The first sliding shaft and the second sliding shaft are mounted on the stator structure. A first sliding groove that adapts to a shape of the first sliding shaft and a second sliding groove that adapts to a shape of the second sliding shaft are disposed on the bearing part. The first sliding groove includes a first groove body and the first support parts that are formed on the first groove body and that are distributed at intervals. In an assembly status, the first sliding shaft is clamped in the first sliding groove on the bearing part, to enable a peripheral surface of the first sliding shaft to be in contact with a support surface of the first support part, so as to restrict the relative motion directions of the mover structure and the stator structure. The second sliding groove includes a second groove body and the second support part formed on the second groove body. In the assembly status, the second sliding shaft is clamped in the second sliding groove on the bearing part, to enable a peripheral surface of the second sliding shaft to be in contact with a support surface of the second support part, so as to restrict separation of the mover structure from the stator structure and prevent the mover structure from rotating around an axis relative to the stator structure in combination with the first sliding shaft and the first sliding groove.

For the motor, a principle that three points are always coplanar is used for three-point shaft-holding bearing, and a formed triangle is always unique. A four-point shaft-holding bearing solution (or a shaft-holding bearing solution of more than four points) cannot ensure that shaft-holding bearing points are always on a same plane. Therefore, a triangle formed by the four-point shaft-holding bearing may be any one of a plurality of triangles formed by any three vertices. Therefore, a stress condition of the motor of the three-point shaft-holding bearing solution is more stable. Based on this, for action points of comprehensive acting forces in different postures, a triangle formed by three-point shaft-holding bearing is more stable, and the motor always holds the shaft at three bearing points during motion. Therefore, the three-point shaft-holding bearing solution can effectively improve stability of the motor during motion, reduce a micro swing amplitude, optimize a dynamic tilt characteristic, and reduce noise of the motor.

In some possible implementations of the first aspect, in the motor, a V-shaped groove that adapts to the shape of the first sliding shaft is disposed on the first support part, and a U-shaped groove that adapts to the shape of the second sliding shaft is disposed on the second support part.

In other words, in this application, the V-shaped groove that adapts to the shape of the first sliding shaft is disposed on the first support part, and the first support part is clamped with the first sliding shaft through the V-shaped groove. The U-shaped groove that adapts to the shape of the second sliding shaft is disposed on the second support part. The second support part is clamped with the second sliding shaft through the U-shaped groove. It may be understood that an outline of the groove body on the first support part and an outline of the groove body on the second support part are merely some examples, and any other groove body on the first support part and the groove body on the second support part that can implement a corresponding function also fall within the protection scope of this application. This is not specifically limited in this application.

In the motor, the first support part in the first sliding groove and the second support part in the second sliding groove have simple and reasonable structures, and can ensure stable connection between the first support part and the first sliding groove and stable connection between the second support part and the second sliding groove, so that stability of a structure of the motor is improved.

In some possible implementations of the first aspect, in the motor, an action point of a comprehensive acting force that needs to be overcome in a running process of the motor is located in a triangle area formed by the two first support parts and the one second support part.

The comprehensive acting force is an acting force that needs to be overcome when a drive structure in the motor drives the mover structure to move relative to the stator structure.

In some possible implementations, a manner of determining the triangle area based on the two first support parts and the one second support part may be: integrating each first support part as one first support point, integrating the second support part as one second support point, and subsequently forming the triangle area based on the two first support points and the one second support point.

In some implementations of this application, the two first support points and the one second support point are used as three vertices to form the triangle area.

In some other alternative implementations of this application, a projection plane is determined, the two first support points and the one second support point are projected onto the projection plane to obtain three projected points, and then the three projected points are used as three vertices to form the triangle area. The projection plane may be a coplanar plane of the first axis of the first sliding shaft and the second axis of the second sliding shaft, or the projection plane may be a parallel plane of a coplanar plane of the first axis of the first sliding shaft and the second axis of the second sliding shaft. Projections of the two first support points and the one second support point onto the projection plane may be orthographic projections of the two first support points and the one second support point onto the projection plane. This is not specifically limited in this application.

In addition, the manner of determining the triangle area based on the two first support parts and the one second support part may alternatively be: using a center or a gravity center of each first support part as one first support point, using a center or a gravity center of the second support part as one second support point, and subsequently forming the triangle area based on the two first support points and the one second support point.

It may be understood that the foregoing manners of determining the triangle area based on the two first support parts and the one second support part are merely examples, and a manner of determining the triangle area in another form also falls within the protection scope of this application. This is not specifically limited in this application.

In some implementations of this application, the action point of the comprehensive acting force that needs to be overcome in the running process of the motor may be an actual location at which the comprehensive acting force acts on the motor. In some other alternative implementations of this application, the action point of the comprehensive acting force that needs to be overcome in the running process of the motor may be a projection location, on a projection plane, of an actual location at which the comprehensive acting force acts on the motor.

An overall structure of the motor is simple, and the force received by the motor is uniform and reasonable, so that service life of each part in the motor is prolonged, and an economic benefit is improved.

In some possible implementations of the first aspect, in the motor, the comprehensive acting force is a combined force of gravity of the mover structure and a magnetic attraction force between the mover structure and the stator structure. It may be understood that the foregoing is merely some implementations of the comprehensive acting force in this embodiment of this application, and the comprehensive acting force may alternatively be represented in another form. This is not specifically limited in this application.

In some possible implementations of the first aspect, in the motor, the action point of the comprehensive acting force coincides with a center of the triangle area formed by the two first support parts and the one second support part.

The force received by the motor is further optimized, so that the service life of each part in the motor is further prolonged, and the economic benefit is further improved.

In some possible implementations, distances from any first support part to the second support part are equal. In other words, the two first support parts are symmetrically distributed on the first groove body relative to the second support part.

In some possible implementations of the first aspect, in the motor, a material of the bearing part is any one of stainless steel, liquid crystal polymer, polycarbonate, or polyamide. A material model of the liquid crystal polymer may be CM529b.

In some possible implementations, sizes of the first support part and the second support part in a direction of the first axis (or the second axis) are not specifically limited in this application. For example, in the motor, a size range of the first support part in the direction of the first axis is 0.8 mm to 1 mm. For another example, in the motor, a size range of the second support part in the direction of the second axis is 0.7 mm to 0.9 mm.

A second aspect of this application provides a motor. The motor includes a mover structure, a stator structure, a first sliding shaft, a second sliding shaft, and a bearing part. The bearing part includes a first bearing part and a second bearing part. A second axis of the second sliding shaft is parallel to a first axis of the first sliding shaft. The first bearing part is connected to the mover structure, the first sliding shaft is connected to the stator structure, the second bearing part is connected to the stator structure, and the second sliding shaft is connected to the mover structure. Alternatively, the first bearing part is connected to the stator structure, the first sliding shaft is connected to the mover structure, the second bearing part is connected to the mover structure, and the second sliding shaft is connected to the stator structure. Two first support parts that adapt to the first sliding shaft are disposed on the first bearing part, and the first sliding shaft is clamped in the two first support parts, to restrict relative motion directions of the mover structure and the stator structure. One second support part that adapts to the second sliding shaft is disposed on the second bearing part, and the second sliding shaft is clamped in the second support part on the bearing part, to restrict separation of the mover structure from the stator structure.

In some possible implementations of the second aspect, in the motor, a V-shaped groove that adapts to the shape of the first sliding shaft is disposed on the first support part, and a U-shaped groove that adapts to the shape of the second sliding shaft is disposed on the second support part.

A third aspect of this application provides a camera module. The camera module includes a lens, an optical sensing component, and any motor according to the first aspect, the possible implementations of the first aspect, the second aspect, and the possible implementations of the second aspect. The lens is connected to the mover structure in the motor, and the optical sensing component is connected to the stator structure in the motor. Alternatively, the lens is connected to the stator structure in the motor, and the optical sensing component is connected to the mover structure in the motor.

A fourth aspect of this application provides an electronic device. The electronic device includes the camera module according to any one of the second aspect and the possible implementations of the second aspect.

### BRIEF DESCRIPTION OF DRAWINGS

FIG. 1 (a) is a three-dimensional diagram of a mobile phone 1 according to an embodiment of this application;
FIG. 1 (b) is an exploded view of a mobile phone 1 according to an embodiment of this application;
FIG. 2 is an exploded view of a motor 30' according to an embodiment of this application;
FIG. 3 is a three-dimensional diagram of a bearing part 500' according to an embodiment of this application;
FIG. 4(a) is a diagram of the bearing part 500' in the motor 30' in FIG. 3 from a bottom view angle;
FIG. 4(b) is a diagram of the bearing part 500', a first sliding shaft 300, and a second sliding shaft 400 in the motor 30' in FIG. 3 from a bottom view angle after assembly, where the first sliding shaft 300 and the second sliding shaft 400 are represented by dashed lines;
FIG. 5 is a diagram of distribution of bearing points between the bearing part 500' and the first sliding shaft 300 and the second sliding shaft 400 in FIG. 4(b);
FIG. 6 is an exploded view of a motor 30 according to an embodiment of this application;
FIG. 7 is a three-dimensional diagram of a bearing part 500 according to an embodiment of this application;
FIG. 8(a) is a diagram of the bearing part 500 in the motor 30 in FIG. 7 from a bottom view angle;
FIG. 8(b) is a diagram of the bearing part 500, a first sliding shaft 300, and a second sliding shaft 400 in the motor 30 in FIG. 7 from a bottom view angle after assembly, where the first sliding shaft 300 and the second sliding shaft 400 are represented by dashed lines;
FIG. 9 is a diagram of distribution of bearing points between the bearing part 500 and the first sliding shaft 300 and the second sliding shaft 400 in FIG. 8(b);
FIG. 10(a) is a diagram of a simulation result of a three-point shaft-holding bearing solution in a first direction under an asymmetric magnetic force according to an embodiment of this application, where a horizontal axis represents time in a unit of ms, and a vertical axis represents a swing amount in a unit of µm;
FIG. 10(b) is a diagram of a simulation result of a three-point shaft-holding bearing solution in a second direction under an asymmetric magnetic force according to an embodiment of this application, where a horizontal axis represents time in a unit of ms, and a vertical axis represents a swing amount in a unit of µm;
FIG. 10(c) is a diagram of a simulation result of a four-point shaft-holding bearing solution in a first direction under an asymmetric magnetic force according to an embodiment of this application, where a horizontal axis represents time in a unit of ms, and a vertical axis represents a swing amount in a unit of µm;
FIG. 10(d) is a diagram of a simulation result of a four-point shaft-holding bearing solution in a second direction under an asymmetric magnetic force according to an embodiment of this application, where a horizontal axis represents time in a unit of ms, and a vertical axis represents a swing amount in a unit of µm;
FIG. 10(e) is a diagram of a simulation result of a three-point shaft-holding bearing solution in a first direction under a symmetric magnetic force according to an embodiment of this application, where a horizontal axis represents time in a unit of ms, and a vertical axis represents a swing amount in a unit of µm;
FIG. 10(f) is a diagram of a simulation result of a three-point shaft-holding bearing solution in a second direction under a symmetric magnetic force according to an embodiment of this application, where a horizontal axis represents time in a unit of ms, and a vertical axis represents a swing amount in a unit of µm;
FIG. 10(g) is a diagram of a simulation result of a four-point shaft-holding bearing solution in a first direction under a symmetric magnetic force according to an embodiment of this application, where a horizontal axis represents time in a unit of ms, and a vertical axis represents a swing amount in a unit of µm;
FIG. 10(h) is a diagram of a simulation result of a four-point shaft-holding bearing solution in a second direction under a symmetric magnetic force according to an embodiment of this application, where a horizontal axis represents time in a unit of ms, and a vertical axis represents a swing amount in a unit of µm;
FIG. 11 is a three-dimensional diagram of a motor 30 according to an embodiment of this application;
FIG. 12 is an exploded view of a motor 30 according to an embodiment of this application;
FIG. 13 is a cross-sectional view of a motor 30 along a section A-A in FIG. 11 according to an embodiment of this application;
FIG. 14(a) is a cross-sectional view of a motor 30 along a section B-B in FIG. 11 according to an embodiment of this application;
FIG. 14(b) is a cross-sectional view of a motor 30 along a section C-C in FIG. 11 according to an embodiment of this application;
FIG. 15(a) is a partial enlargement view of an area S₁ in FIG. 13 according to an embodiment of this application;
FIG. 15(b) is a partial enlargement view of an area S₂ in FIG. 13 according to an embodiment of this application;
FIG. 16 (a) is a flowchart of a design solution of a bearing part 500 according to an embodiment of this application;
FIG. 16 (b) is a flowchart of a processing solution of a bearing part 500 according to an embodiment of this application;
FIG. 17 (a) shows an action point O of a comprehensive acting force according to an embodiment of this application;
FIG. 17 (b) is a diagram of a design solution of a first support part 512 according to an embodiment of this application;
FIG. 17 (c) is a diagram of a design solution of a second support part 522 according to an embodiment of this application; and
FIG. 17 (d) is a diagram of a design solution of a bearing part 500 according to an embodiment of this application.

Reference numerals: 1: mobile phone; 11: screen; 12: middle frame; 13: rear cover; 14: camera module; 10: lens; 20: optical sensing component; 30: motor; 100: mover structure; 200: stator structure; 210: first mounting part; 211: first mounting hole; 212: second mounting hole; 220: second mounting part; 221: third mounting hole; 222: fourth mounting hole; 300: first sliding shaft; 310: first end of the first sliding shaft; 320: second end of the first sliding shaft; 400: second sliding shaft; 410: first end of the second sliding shaft; 420: second end of the second sliding shaft; 500: bearing part; 510: first sliding groove; 511: first groove body; 512: first support part; 520: second sliding groove; 521: second groove body; and 522: second support part.

### DESCRIPTION OF EMBODIMENTS

To make the objectives, technical solutions, and advantages of this application clearer, the following further describes the implementations of this application in detail with reference to the accompanying drawings.

In embodiments of this application, the terms "first", "second", "third", and "fourth" are merely intended for a purpose of description, and shall not be understood as an indication or implication of relative importance or an implicit indication of a quantity of indicated technical features. Therefore, a feature defined by "first", "second", "third", or "fourth" may explicitly or implicitly include one or more of the features.

A term "and/or" in embodiments of this application describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

In the descriptions of embodiments of this application, it should be noted that terms "installation" and "connection" should be understood in a broad sense unless there is a clear stipulation and limitation. For example, "connection" may be a detachable connection, a non-detachable connection, a direct connection, or an indirect connection through an intermediate medium. Orientation terms mentioned in embodiments of this application, for example, "up", "down", "left", "right", "inside", "outside", are merely directions in the accompanying drawings. Therefore, the orientation terms are used to better and more clearly describe and understand embodiments of this application, instead of indicating or implying that a specified apparatus or element needs to have a specific orientation, and be constructed and operated in the specific orientation. Therefore, this cannot be understood as a limitation on embodiments of this application. "A plurality of" means at least two.

This application provides an electronic device. The electronic device may be any device having an image shooting module. For example, the electronic device includes but is not limited to any one of a mobile phone, a tablet computer, a laptop computer, a wearable device, a head-mounted display, or a video recording device. For ease of description and understanding, the following provides detailed description by using an example in which the electronic device is a mobile phone 1.

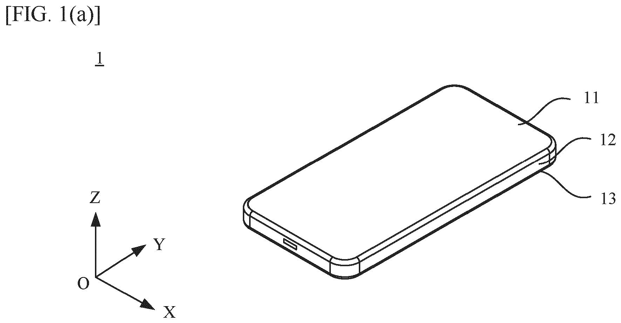

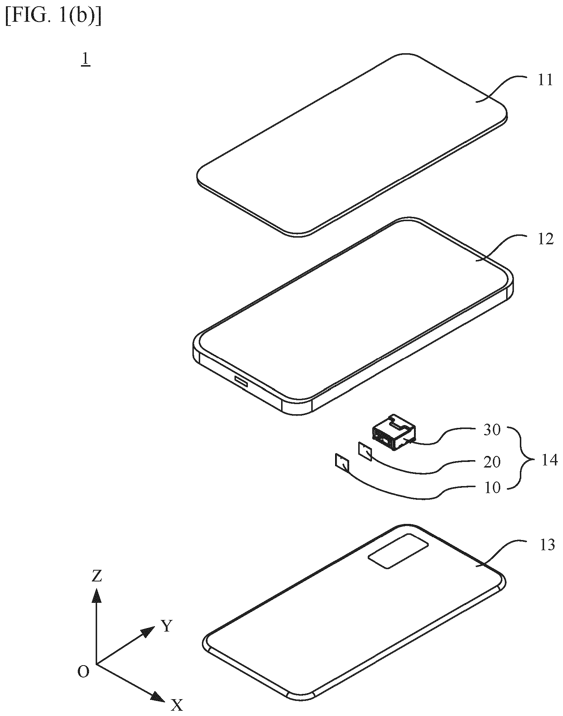

FIG. 1 (a) is a three-dimensional diagram of the mobile phone 1 according to an embodiment of this application. FIG. 1 (b) is an exploded view of the mobile phone 1 according to an embodiment of this application. For ease of description and understanding, the following defines directions of the mobile phone 1 with reference to FIG. 1(a) and FIG. 1(b). As shown in FIG. 1(a) and FIG. 1(b), a width direction of the mobile phone 1 is an X-axis direction, where the width direction may be a width direction of a screen 11 (mentioned below), or may be understood as a holding direction of a user. A length direction of the mobile phone 1 is a Y-axis direction, where the length direction may be a length direction of the screen 11, or may be understood as a direction that is perpendicular to the holding direction of the user and that is in a plane on which the screen 11 is located. A thickness direction of the mobile phone 1 is a Z-axis direction, where the Z-axis direction is perpendicular to a light-emitting surface of the mobile phone 1, and the light-emitting surface is a surface used for light-emitting in the mobile phone 1. The X-axis direction, the Y-axis direction, and the Z-axis direction intersect each other.

In some implementations of this application, the X-axis direction, the Y-axis direction, and the Z-axis direction are perpendicular to each other. It may be understood that mutual perpendicularity in this application is not absolute perpendicularity, and approximate perpendicularity (for example, an included angle between two structural features is 89.9°) caused by a machining error and an assembly error also falls within a range of the mutual perpendicularity in this application. In addition, mutual parallelism mentioned below is not absolute parallelism either. Approximate parallelism (for example, an included angle between two structural features is 0.1°) caused by a machining error and an assembly error also falls within a range of the mutual parallelism in this application. This is not specifically limited in this application, and the following does not repeatedly describe limitations on the mutual perpendicularity and the mutual parallelism.

Still with reference to FIG. 1(a) and FIG. 1(b), in some embodiments of this application, the mobile phone 1 includes the screen 11, a middle frame 12, a rear cover 13, and a camera module 14. The screen 11, the middle frame 12, and the rear cover 13 are sequentially disposed along a negative direction of a Z axis. The screen 11, the middle frame 12, and the rear cover 13 jointly form a mounting cavity (not shown). The camera module 14 is located in the mounting cavity, and is mounted on at least one of the screen 11, the middle frame 12, and the rear cover 13. It may be understood that the foregoing implementations are merely some examples of a specific structure of the mobile phone 1, and another mobile phone 1 including the camera module 14 also falls within the protection scope of this application. This is not specifically limited.

After the specific structure of the mobile phone 1 is described, the following describes in detail a specific structure of the camera module 14 in the mobile phone 1 with reference to the accompanying drawings. Still with reference to FIG. 1(b), in some embodiments of this application, the camera module 14 includes a lens 10, an optical sensing component 20, and a motor 30. The motor 30 includes a drive end (which may be a mover structure 100 below) and an external housing (which may be a stator structure 200 below). The lens 10 is connected to the drive end of the motor 30, and the optical sensing component 20 is connected to the external housing of the motor 30. After receiving a control signal, the motor 30 drives, via the drive end based on the control signal, the lens 10 to move relative to the optical sensing component 20 on the external housing of the motor 30, to adjust a distance between the lens 10 and the optical sensing component 20, and implement focusing or resetting of the camera module 14.

In some embodiments of this application, the camera module 14 further includes a base (not shown in the figure) and a control component (not shown in the figure). The external housing of the motor 30 is mounted on the base. The control component is signal-connected to the motor 30, and is configured to receive a control signal from a circuit component of the mobile phone 1, and send the control signal to the motor 30. Specifically, when the control component receives a focusing signal or a resetting signal, the control component converts the focusing signal or the resetting signal into a control signal, and sends the control signal to the motor 30. The motor 30 drives, via the drive end based on the received control signal, the lens 10 to move, to adjust the distance between the lens 10 and the optical sensing component 20, and implement focusing or resetting of the camera module 14.

To resolve a problem that an image shooting effect and a video recording effect of the camera module are affected due to a poor posture and video tremors of the camera module in the background, and long-distance focusing cannot be supported, this application provides a motor 30'. In the motor 30', a first sliding shaft cooperates with at least two first support parts in a first sliding groove, and a second sliding shaft cooperates with at least two second support parts in a second sliding groove, to complete guiding between a mover structure 100 and a stator structure 200 in the motor 30'.

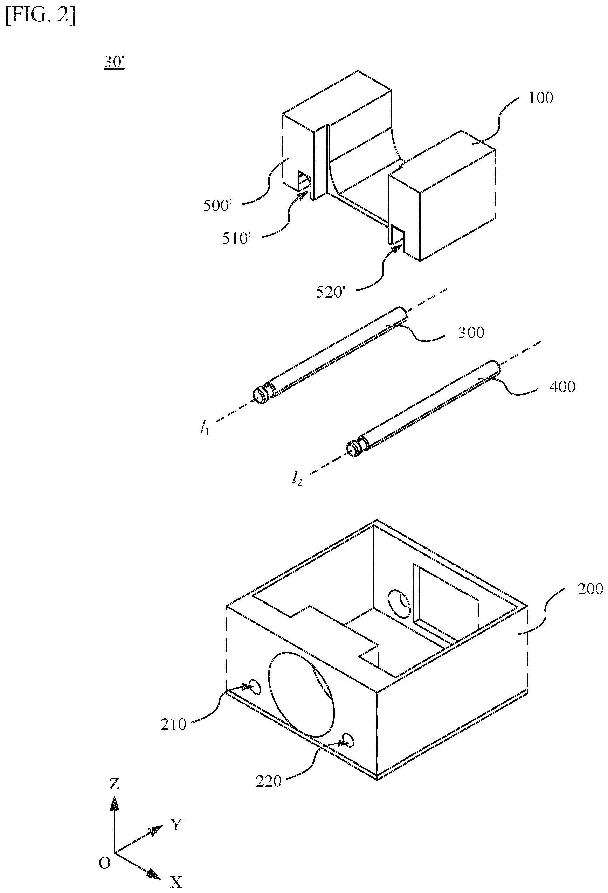

FIG. 2 is an exploded view of the motor 30' according to an embodiment of this application. As shown in FIG. 2, in some embodiments of this application, the motor 30' includes the mover structure 100, the stator structure 200, a first sliding shaft 300, a second sliding shaft 400, and a bearing part 500'. A first mounting part 210 and a second mounting part 220 are formed on the stator structure 200. A first axis *l*₁ of the first sliding shaft 300 is parallel to a second axis *l*₂ of the second sliding shaft. The first sliding shaft 300 and the second sliding shaft 400 are mounted on the stator structure 200. For example, the first sliding shaft 300 is mounted on the stator structure 200 via the first mounting part 210 on the stator structure 200, and the second sliding shaft 400 is mounted on the stator structure 200 via the second mounting part 220 on the stator structure 200. The bearing part 500' is connected to the mover structure 100. A first sliding groove 510' that adapts to a shape of the first sliding shaft 300 and a second sliding groove 520' that adapts to a shape of the second sliding shaft 400 are disposed on the bearing part 500'. In an assembly status, the first sliding shaft 300 is clamped in the first sliding groove 510' on the bearing part 500', and the second sliding shaft 400 is clamped in the second sliding groove 520' on the bearing part 500'. An axis of a shaft in this application is a rotation center line of the shaft. This is not repeatedly limited in the following.

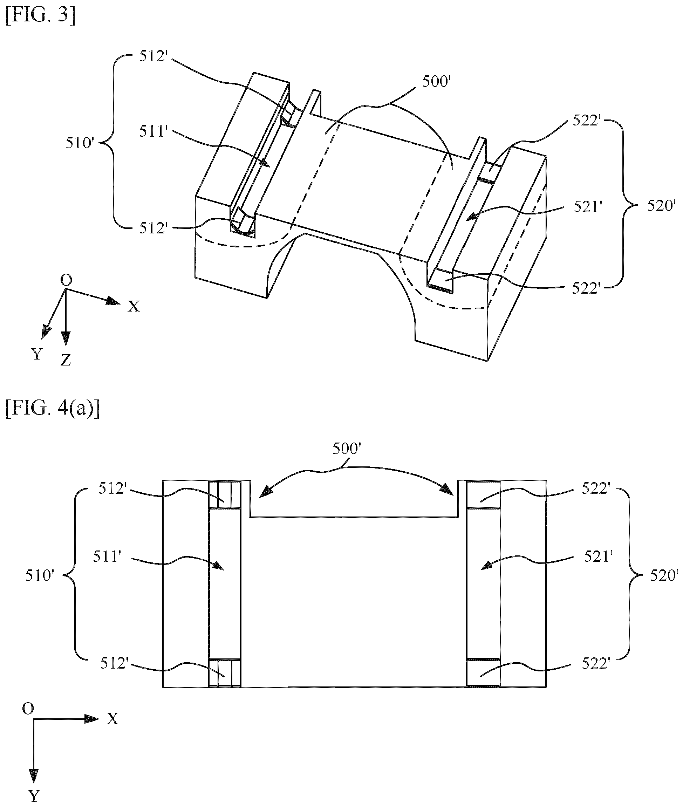

The following further describes in detail the bearing part 500' in some embodiments of this application with reference to the accompanying drawings. FIG. 3 is a three-dimensional diagram of the bearing part 500' according to an embodiment of this application. As shown in FIG. 3, in some embodiments of this application, the first sliding groove 510' and the second sliding groove 520' are disposed on the bearing part 500'. The first sliding groove 510' includes a first groove body 511' and at least two first support parts 512' that are formed on the first groove body 511' and that are distributed at intervals. The second sliding groove 520' includes a second groove body 521' and at least two second support parts 522' that are formed on the second groove body 521' and that are distributed at intervals. For ease of description and understanding, the following continues description by using an example in which there are two first support parts 512' on the first groove body 511' and two second support parts 522' on the second groove body 521'.

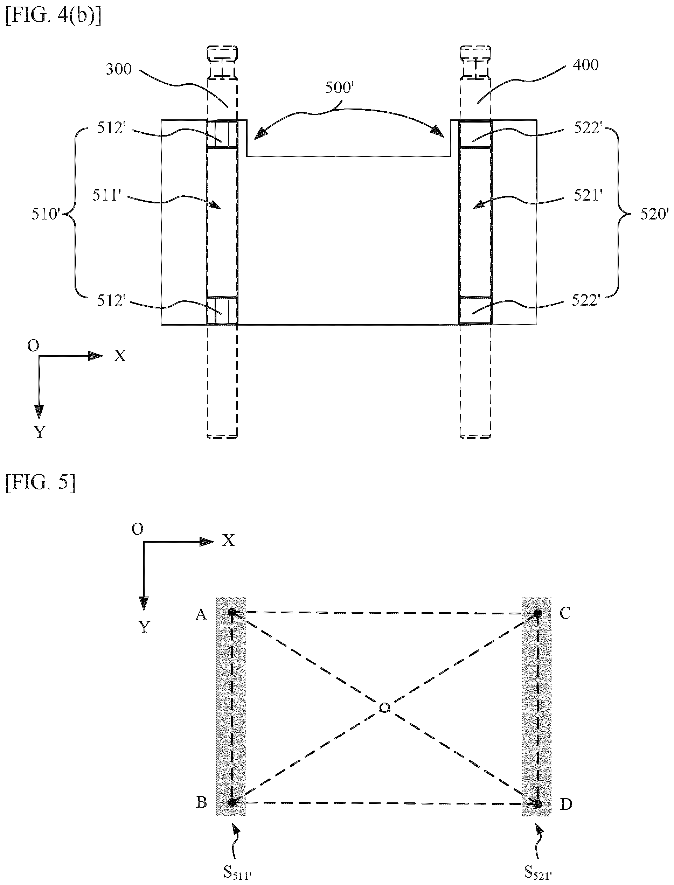

FIG. 4(a) is a diagram of the bearing part 500' in the motor 30' in FIG. 3 from a bottom view angle. FIG. 4(b) is a diagram of the bearing part 500', the first sliding shaft 300, and the second sliding shaft 400 in the motor 30' in FIG. 3 from the bottom view angle after assembly, where the first sliding shaft 300 and the second sliding shaft 400 are represented by dashed lines. With reference to FIG. 4(a) and FIG. 4(b), it can be learned that the two first support parts 512' distributed at intervals are clamped in the first sliding shaft 300 separately, and motion directions of relative motion between the mover structure 100 and the stator structure 200 are restricted by a peripheral surface of the first sliding shaft 300 and a support surface of each first support part 512'. The two second support parts 522' distributed at intervals are clamped in the second sliding shaft 400 separately, and a peripheral surface of the second sliding shaft 400 and a support surface of the second support part 522' cooperate with the peripheral surface of the first sliding shaft 300 and the support surface of the first support part 512', to restrict separation of the mover structure 100 from the stator structure 200.

FIG. 5 is a diagram of distribution of bearing points between the bearing part 500' and the first sliding shaft 300 and the second sliding shaft 400 in FIG. 4(b). In this embodiment, the bearing points are distribution locations of the first support part 512' and the second support part 522' on the bearing part 500'. The bearing points may alternatively be understood as areas in which the first sliding shaft 300 and the second sliding shaft 400 are in contact with the bearing part 500' when the first sliding shaft 300 and the second sliding shaft 400 are mounted on the bearing part 500'. In FIG. 5, bearing points formed by the two first support parts 512' and the first sliding shaft 300 may be represented as a point A and a point B in FIG. 5. Bearing points formed by the two second support parts 522' and the second sliding shaft 400 may be represented as a point C and a point D in FIG. 5. S₅₁₁' in the figure represents an area in which the first groove body 511' is located, and S₅₂₁' in the figure represents an area in which the second groove body 521' is located. As shown in FIG. 5, the point A, the point B, the point C, and the point D are located at four vertices of a quadrilateral.

In the foregoing embodiment, the motor 30' has advantages such as a small posture difference, a small dynamic tilt, good anti-video tremor, and a long stroke. However, the motor 30' needs to use a four-point shaft-holding bearing solution of at least "two first support parts 512' + two second support parts 522'". In one aspect, due to a molding dimension tolerance between the first support part 512' and the second support part 522', it is difficult for the four bearing points to be located on a same plane. As a result, in a process in which the mover structure 100 moves relative to the stator structure 200, a shaft-holding location (namely, a bearing point) is unstable and jumps back and forth, and a dynamic tilt change is large. Consequently, imaging quality deteriorates. In another aspect, because the motor 30' runs unstably, the mover structure 100 in the motor 30' swings slightly in the motion process, and the mover structure 100 continuously hits the first sliding shaft 300 and/or the second sliding shaft 400 under closed-loop control. As a result, running noise is generated, and video recording and user experience are affected.

Based on this, to resolve the technical problems of dynamic tilting and running noise of the motor 30' in a closed-loop motion process, this application provides the motor 30. In the motor 30, a first sliding shaft cooperates with at least two first support parts in a first sliding groove, and a second sliding shaft cooperates with one second support part in a second sliding groove, to complete guiding between a mover structure 100 and a stator structure 200 in the motor 30.

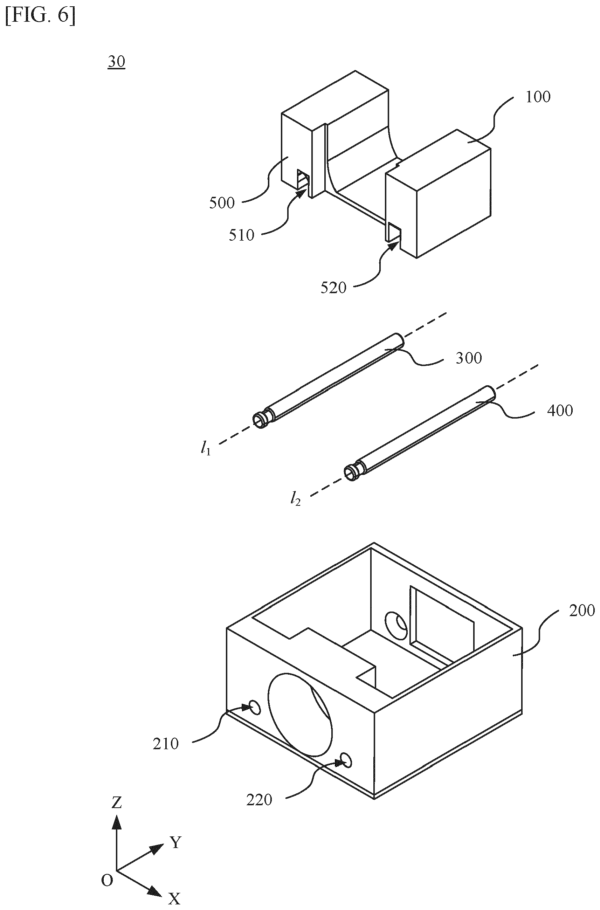

FIG. 6 is an exploded view of the motor 30 according to an embodiment of this application. As shown in FIG. 6, in some embodiments of this application, the motor 30 includes the mover structure 100, the stator structure 200, a first sliding shaft 300, a second sliding shaft 400, and a bearing part 500. A first mounting part 210 and a second mounting part 220 are formed on the stator structure 200. A first axis *l*₁ of the first sliding shaft 300 is parallel to a second axis *l*₂ of the second sliding shaft 400. The first sliding shaft 300 and the second sliding shaft 400 are mounted on the stator structure 200. For example, the first sliding shaft 300 is mounted on the stator structure 200 via the first mounting part 210 on the stator structure 200, and the second sliding shaft 400 is mounted on the stator structure 200 via the second mounting part 220 on the stator structure 200. The bearing part 500 is connected to the mover structure 100. A first sliding groove 510 that adapts to a shape of the first sliding shaft 300 and a second sliding groove 520 that adapts to a shape of the second sliding shaft 400 are disposed on the bearing part 500. In an assembly status, the first sliding shaft 300 is clamped in the first sliding groove 510 on the bearing part 500, and the second sliding shaft 400 is clamped in the second sliding groove 520 on the bearing part 500.

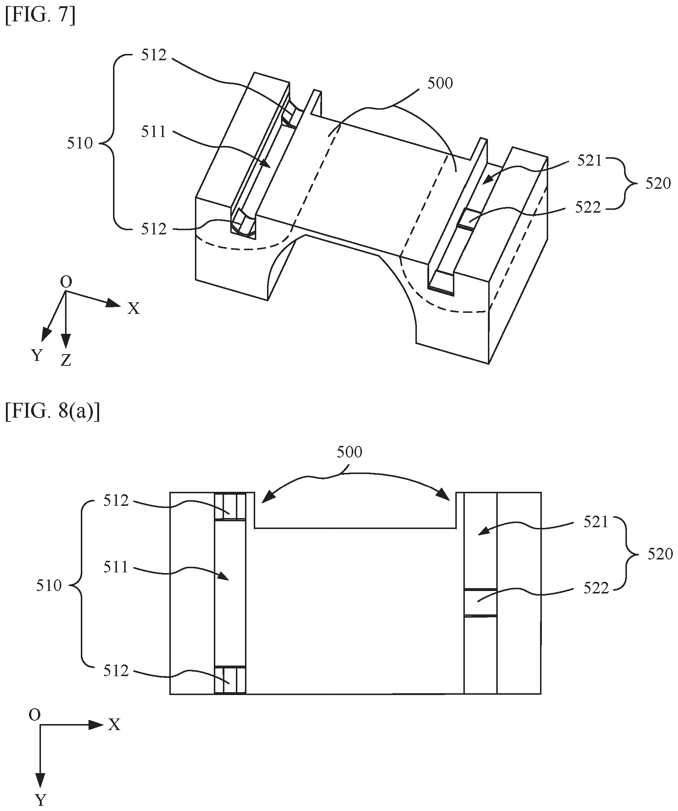

The following further describes in detail the bearing part 500 in some embodiments of this application with reference to the accompanying drawings. FIG. 7 is a three-dimensional diagram of the bearing part 500 according to an embodiment of this application. As shown in FIG. 7, in some embodiments of this application, the first sliding groove 510 and the second sliding groove 520 are disposed on the bearing part 500. The first sliding groove 510 includes a first groove body 511 and at least two first support parts 512 that are formed on the first groove body 511 and that are distributed at intervals. The second sliding groove 520 includes a second groove body 521 and one second support part 522 formed on the second groove body 521. For ease of description and understanding, the following continues description by using an example in which there are two first support parts 512 on the first groove body 511.

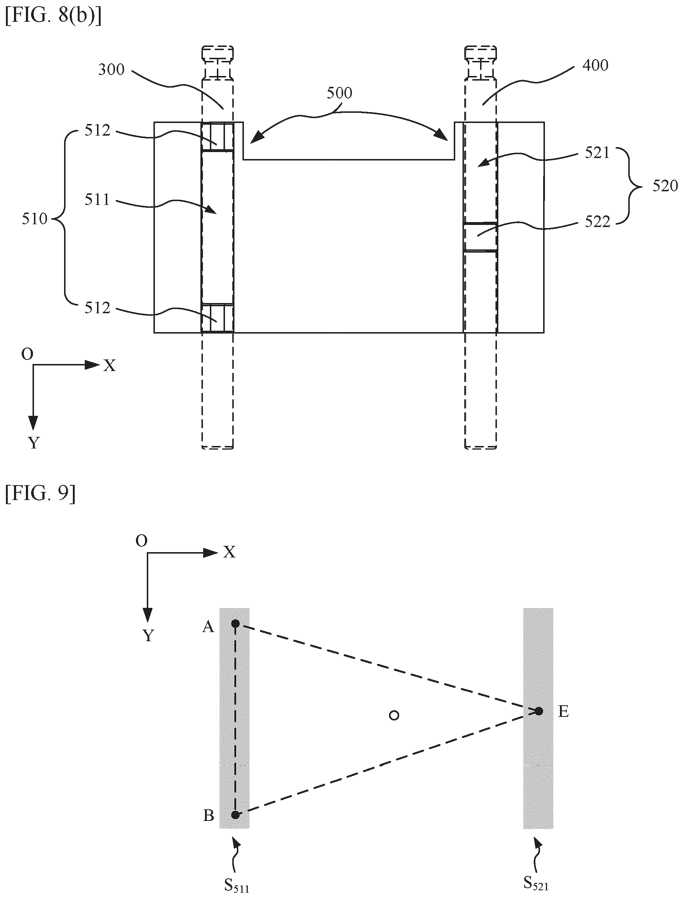

FIG. 8(a) is a diagram of the bearing part 500 in the motor 30 in FIG. 7 from a bottom view angle. FIG. 8(b) is a diagram of the bearing part 500, the first sliding shaft 300, and the second sliding shaft 400 in the motor 30 in FIG. 7 from the bottom view angle after assembly, where the first sliding shaft 300 and the second sliding shaft 400 are represented by dashed lines. With reference to FIG. 8(a) and FIG. 8(b), it can be learned that the two first support parts 512 distributed at intervals are clamped in the first sliding shaft 300 separately, and motion directions of relative motion between the mover structure 100 and the stator structure 200 are restricted by a peripheral surface of the first sliding shaft 300 and a support surface of each first support part 512. The second support part 522 is clamped in the second sliding shaft 400, and a peripheral surface of the second sliding shaft 400 and a support surface of the second support part 522 cooperate with the peripheral surface of the first sliding shaft 300 and the support surface of the first support part 512, to restrict separation of the mover structure 100 from the stator structure 200.

FIG. 9 is a diagram of distribution of bearing points between the bearing part 500 and the first sliding shaft 300 and the second sliding shaft 400 in FIG. 8(b). In this embodiment, the bearing points are distribution locations of the first support part 512 and the second support part 522 on the bearing part 500. The bearing points may alternatively be understood as areas in which the first sliding shaft 300 and the second sliding shaft 400 are in contact with the bearing part 500 when the first sliding shaft 300 and the second sliding shaft 400 are mounted on the bearing part 500. In FIG. 9, bearing points formed by the two first support parts 512 and the first sliding shaft 300 may be represented as a point A and a point B in FIG. 9. A bearing point formed by the one second support part 522 and the second sliding shaft 400 may be represented as a point E in FIG. 9. S₅₁₁ in the figure represents an area in which the first groove body 511 is located, and S₅₂₁ in the figure represents an area in which the second groove body 521 is located. As shown in FIG. 9, the point A, the point B, and the point E are located at three vertices of a triangle.

In the foregoing embodiment, even if it cannot be ensured that shaft-holding bearing points are always on a same plane due to reasons such as molds and molding conditions, a triangle formed by three-point shaft-holding bearing is always ΔABE according to a principle that three points are always coplanar. The four-point shaft-holding bearing solution (or a shaft-holding bearing solution of more than four points) cannot ensure that shaft-holding bearing points are always on a same plane due to reasons such as molds and molding conditions. Therefore, a triangle formed by four-point shaft-holding bearing may be any one of ΔABC, ΔABD, ΔACD, and ΔBCD. Therefore, a stress condition of the motor 30 of the three-point shaft-holding bearing solution is more stable.

Based on this, for action points of comprehensive acting forces in different postures, a triangle formed by three-point shaft-holding bearing is more stable, and the motor always holds the shaft at three bearing points during motion. Therefore, the three-point shaft-holding bearing solution can effectively improve stability of the motor during motion, reduce a micro swing amplitude, optimize a dynamic tilt characteristic, and reduce noise of the motor.

It can be learned from an experiment that a dynamic tilt of the motor 30 moving in a full stroke is less than 3 min. Running noise of the motor 30 meets a test standard. Therefore, the motor 30 may be applied to a camera module in an electronic device such as a mobile phone or a tablet, and is particularly suitable for an application scenario in which an optical system design has a high requirement on a dynamic tilt characteristic of motion of a motor, or an application scenario in which a user has a high noise requirement.

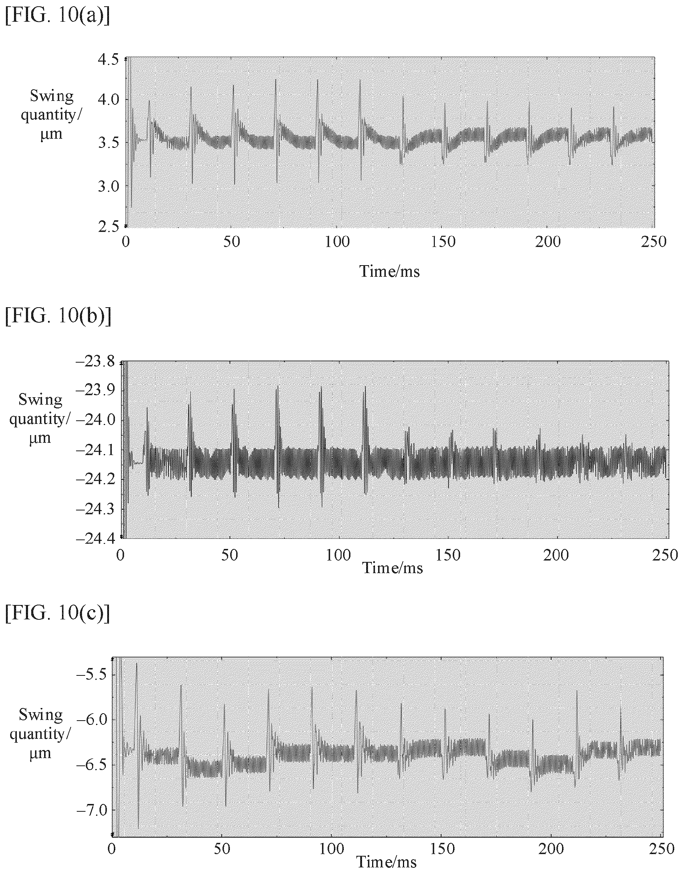

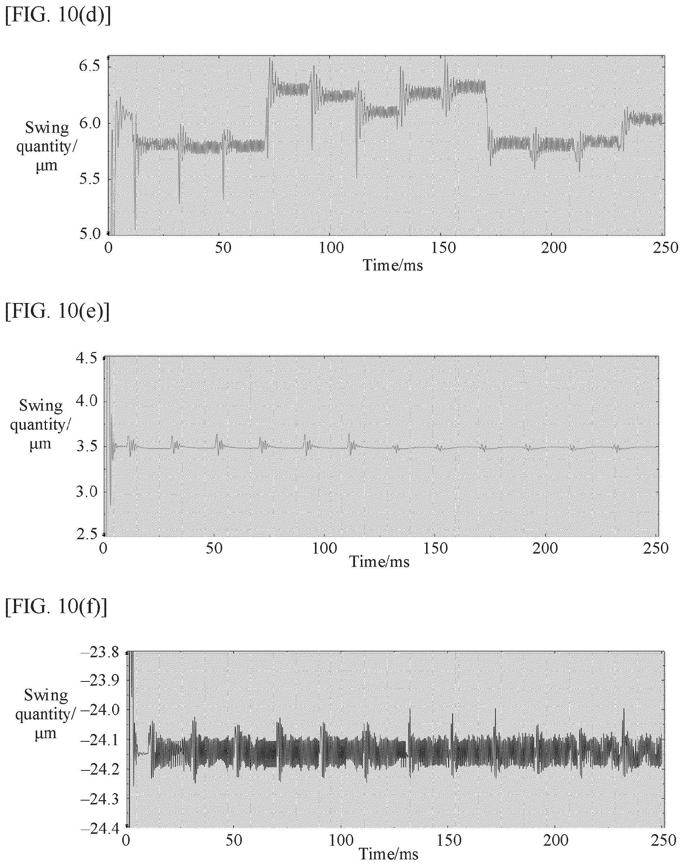

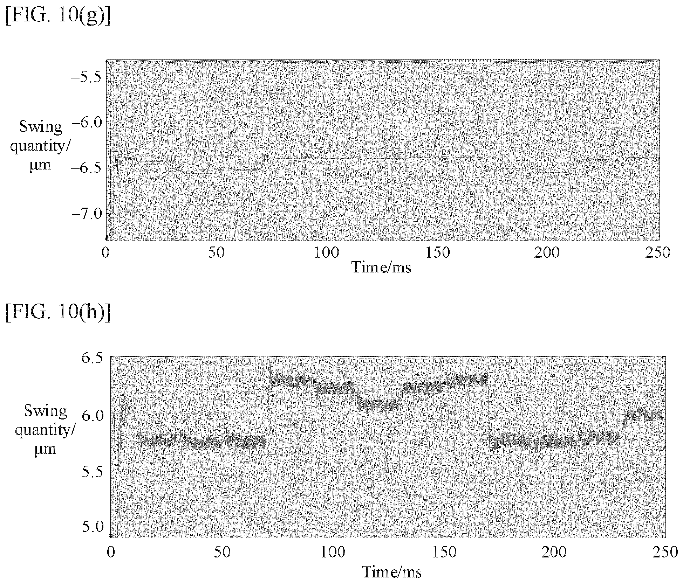

The following further describes advantages of the motor 30 on which the three-point shaft-holding bearing is implemented in detail with reference to a simulation result. FIG. 10(a) is a diagram of a simulation result of a three-point shaft-holding bearing solution in a first direction under an asymmetric magnetic force according to an embodiment of this application. FIG. 10(b) is a diagram of a simulation result of a three-point shaft-holding bearing solution in a second direction under an asymmetric magnetic force according to an embodiment of this application. FIG. 10(c) is a diagram of a simulation result of a four-point shaft-holding bearing solution in a first direction under an asymmetric magnetic force according to an embodiment of this application. FIG. 10(d) is a diagram of a simulation result of a four-point shaft-holding bearing solution in a second direction under an asymmetric magnetic force according to an embodiment of this application. FIG. 10(e) is a diagram of a simulation result of a three-point shaft-holding bearing solution in a first direction under a symmetric magnetic force according to an embodiment of this application. FIG. 10(f) is a diagram of a simulation result of a three-point shaft-holding bearing solution in a second direction under a symmetric magnetic force according to an embodiment of this application. FIG. 10(g) is a diagram of a simulation result of a four-point shaft-holding bearing solution in a first direction under a symmetric magnetic force according to an embodiment of this application. FIG. 10(h) is a diagram of a simulation result of a four-point shaft-holding bearing solution in a second direction under a symmetric magnetic force according to an embodiment of this application. In FIG. 10(a) to FIG. 10(h), a horizontal axis represents time in a unit of ms, and a vertical axis represents a swing amount in a unit of µm. FIG. 10(a) to FIG. 10(h) each represent a variation rule of a swing quantity of the first sliding shaft 300 and the second sliding shaft 400 in the motor 30 in 12 swing periods.

The asymmetric magnetic force means that an acting force applied by a drive structure in the motor 30 to the mover structure 100 is asymmetric (at least one of a magnitude, a direction, and an action point of the acting force is asymmetric). The symmetric magnetic force means that an acting force applied by a drive structure in the motor 30 to the mover structure 100 is symmetric (a magnitude, a direction, and an action point of the acting force are symmetric). For example, the first direction is a left-right swing direction, that is, a swing direction along an X axis, and the second direction is an up-down swing direction, that is, a swing direction along the Z axis. Table 1 is a comparison of simulation results of three-point shaft-holding bearing and four-point shaft-holding bearing obtained according to FIG. 10(a) to FIG. 10(h).

**Table 1 Comparison between simulation results of three-point shaft-holding bearing and four-point shaft-holding bearing**

| Type of magnetic force | Type of shaft-holding | First direction | | | Second direction | | |
|---|---|---|---|---|---|---|---|
| | | Max/µm | Min/µm | Range/µm | Max/µm | Min/µm | Range/µm |
| Asymmetric magnetic force | Three-point shaft-holding | 3.75 | 3.25 | **0.5** | -23.95 | -24.25 | **0.3** |
| | Four-point shaft-holding | -5.75 | -7 | **1.25** | 6.5 | 5.3 | **1.2** |
| Symmetric magnetic force | Three-point shaft-holding | 3.55 | 3.45 | **0.1** | -24.05 | -24.22 | **0.17** |
| | Four-point shaft-holding | -6.4 | -6.6 | **0.2** | 6.4 | 5.75 | **0.65** |

In Table 1, Max represents maximum swing quantities of the first sliding shaft 300 and the second sliding shaft 400 in the motor 30. Min represents minimum swing quantities of the first sliding shaft 300 and the second sliding shaft 400 in the motor 30. Range represents swing ranges of the first sliding shaft 300 and the second sliding shaft 400 in the motor 30, and may alternatively be considered as vibration amplitudes of the first sliding shaft 300 and the second sliding shaft 400.

With reference to FIG. 10(a) to FIG. 10(h) and Table 1, it is not difficult to learn that, when other conditions are the same, a vibration amplitude of the three-point shaft-holding bearing solution is less than a vibration amplitude of the four-point shaft-holding bearing solution. In addition, when other conditions are the same, the symmetric magnetic force and the asymmetric magnetic force also affect the vibration amplitude to a degree. However, an impact varies in different directions, and details are not described herein. Based on this, the simulation comparison also shows that a jitter amplitude of three-point shaft-holding bearing is smaller than that of four-point shaft-holding bearing.

The following further describes a specific structure of the motor 30 in detail with reference to the accompanying drawings.

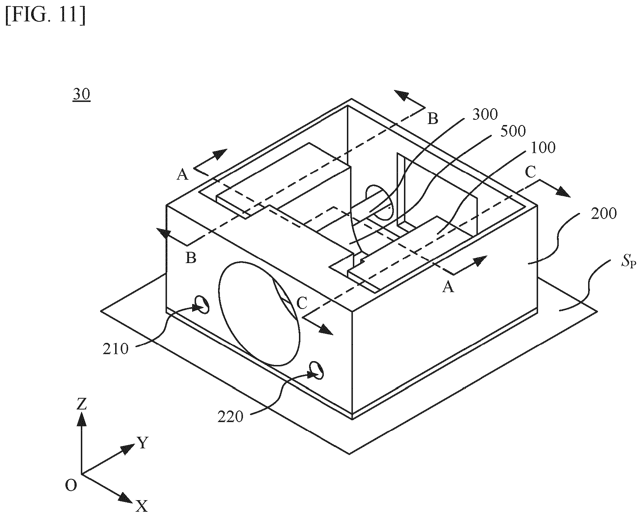

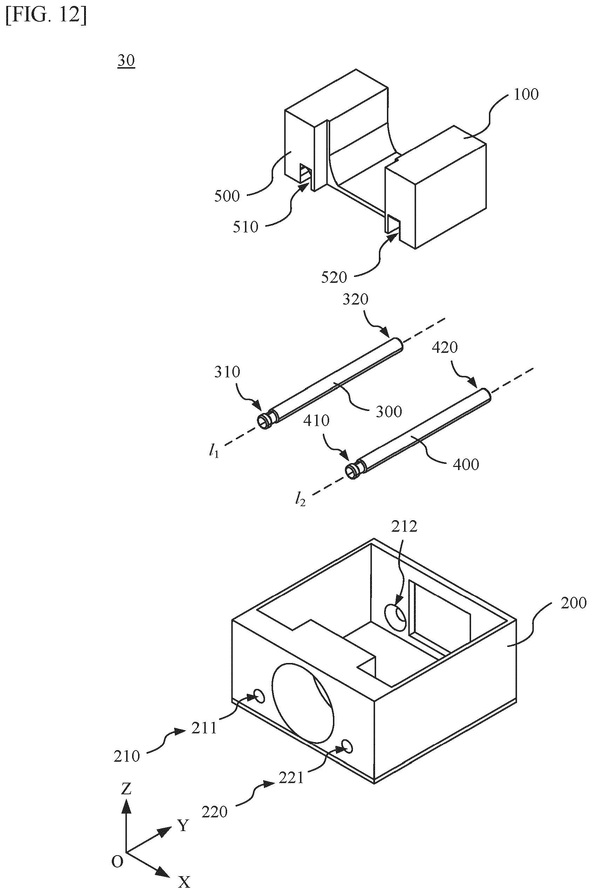

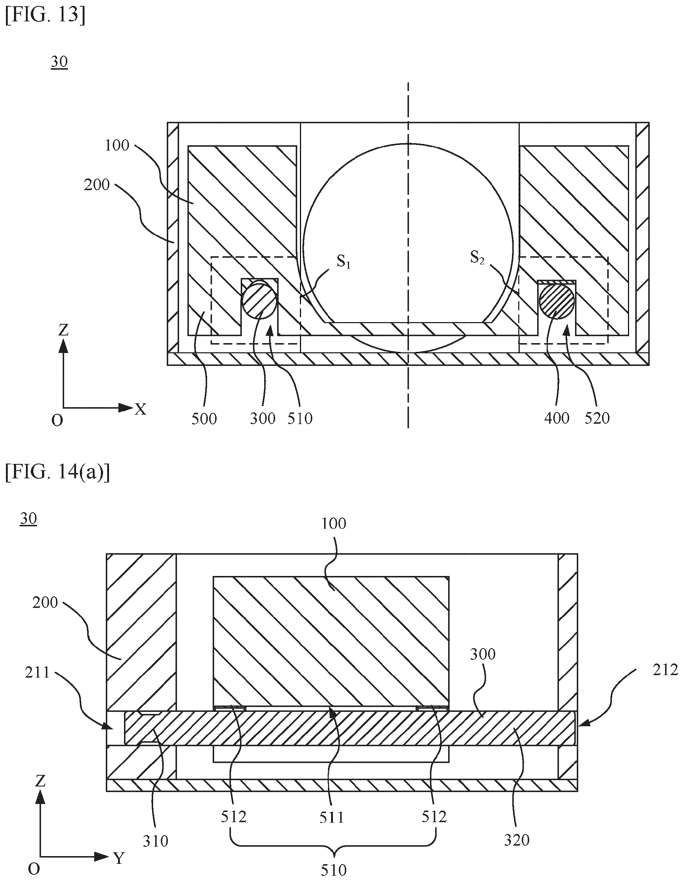

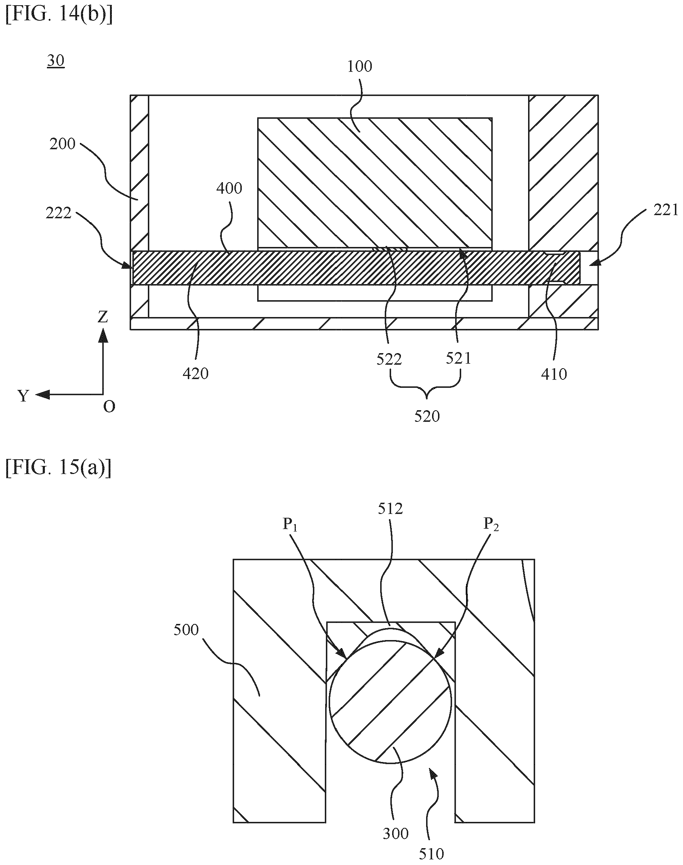

FIG. 11 is a three-dimensional diagram of the motor 30 according to an embodiment of this application. FIG. 12 is an exploded view of the motor 30 according to an embodiment of this application. FIG. 13 is a cross-sectional view of the motor 30 along a section A-A in FIG. 11 according to an embodiment of this application. FIG. 14(a) is a cross-sectional view of the motor 30 along a section B-B in FIG. 11 according to an embodiment of this application. FIG. 14(b) is a cross-sectional view of the motor 30 along a section C-C in FIG. 11 according to an embodiment of this application.

With reference to FIG. 11 to FIG. 14(b), it is not difficult to learn that in some embodiments of this application, the motor 30 includes a mover structure 100, a stator structure 200, a first sliding shaft 300, a second sliding shaft 400, and a bearing part 500. The first axis *l*₁ of the first sliding shaft 300 is parallel to the second axis *l*₂ of the second sliding shaft 400. The bearing part 500 is connected to the mover structure 100, and the first sliding shaft 300 and the second sliding shaft 400 are connected to the stator structure 200. Alternatively, the bearing part 500 is connected to the stator structure 200, and the first sliding shaft 300 and the second sliding shaft 400 are connected to the mover structure 100.

The two first support parts 512 that adapt to the first sliding shaft 300 are disposed on the bearing part 500, and the first sliding shaft 300 is clamped in the two first support parts 512, to restrict the relative motion directions of the mover structure 100 and the stator structure 200. One second support part 522 that adapts to the second sliding shaft 400 is further disposed on the bearing part 500, and the second sliding shaft 400 is clamped in the second support part 522 on the bearing part 500, to restrict separation of the mover structure 100 from the stator structure 200.

In some embodiments of this application, the bearing part 500 is connected to the mover structure 100. The first sliding shaft 300 and the second sliding shaft 400 are mounted on the stator structure 200. The first sliding groove 510 that adapts to the shape of the first sliding shaft 300 and the second sliding groove 520 that adapts to the shape of the second sliding shaft 400 are disposed on the bearing part 500. The first sliding groove 510 includes the first groove body 511 and the first support parts 512 that are formed on the first groove body 511 and that are distributed at intervals. In the assembly status, the first sliding shaft 300 is clamped in the first sliding groove 510 on the bearing part 500, to enable the peripheral surface of the first sliding shaft 300 to be in contact with the support surface of the first support part 512, so as to restrict the relative motion directions of the mover structure 100 and the stator structure 200. The second sliding groove 520 includes the second groove body 521 and the second support part 522 formed on the second groove body 521. In the assembly status, the second sliding shaft 400 is clamped in the second sliding groove 520 on the bearing part 500, to enable the peripheral surface of the second sliding shaft 400 to be in contact with the support surface of the second support part 522, so as to restrict separation of the mover structure 100 from the stator structure 200 and prevent the mover structure 100 from rotating around an axis relative to the stator structure 200 in combination with the first sliding shaft 300 and the first sliding groove 510.

The structure that restricts separation of the mover structure 100 from the stator structure 200 in this application is a structure that restricts relative separation of the mover structure 100 and the stator structure 200, that is, maintains the mover structure and the stator structure not to be relatively separated. For example, the mover structure 100 supports the stator structure 200 via a structure. For another example, the stator structure 200 supports the mover structure 100 via a structure. For another example, the mover structure 100 is clamped with the stator structure 200 via a structure. For another example, the stator structure 200 is clamped with the mover structure 100 via a structure. It may be understood that the foregoing connection manners of the structure, the mover structure 100, and the stator structure 200 are merely some examples, and any other structure that can avoid the relative separation between the mover structure 100 and the stator structure 200 also falls within the protection scope of this application. This is not specifically limited in this application.

The following describes working principles of the first support part 512 and the second support part 522 in detail with reference to the accompanying drawings.

FIG. 15(a) is a partial enlargement view of an area S₁ in FIG. 13 according to an embodiment of this application. As shown in FIG. 15 (a), the first sliding shaft 300 is clamped in the first sliding groove 510 on the bearing part 500, to restrict the relative motion directions between the mover structure 100 and the stator structure 200 based on the peripheral surface of the first sliding shaft 300 and a groove surface of the first sliding groove 510 (that is, the support surface of the first support part 512). In other words, the peripheral surface of the first sliding shaft 300 at P₁ cooperates with the groove surface of the first sliding groove 510 (that is, the support surface of the first support part 512), and the peripheral surface of the first sliding shaft 300 at P₂ cooperates with the groove surface of the first sliding groove 510 (that is, the support surface of the first support part 512), to jointly restrict a relative location between the first sliding shaft 300 and the bearing part 500 in any status, and further restrict a relative location of the mover structure 100 relative to the stator structure 200 in any status. In conclusion, the first sliding shaft 300 and the first sliding groove 510 cooperate with each other to jointly restrict the motion directions of relative motion between the mover structure 100 and the stator structure 200. Any status means a status of the motor 30 at any moment, and corresponds to a relative location relationship between the mover structure 100 and the stator structure 200 and a relative location relationship between the first sliding shaft 300 and the first sliding groove 510. Details are not described below.

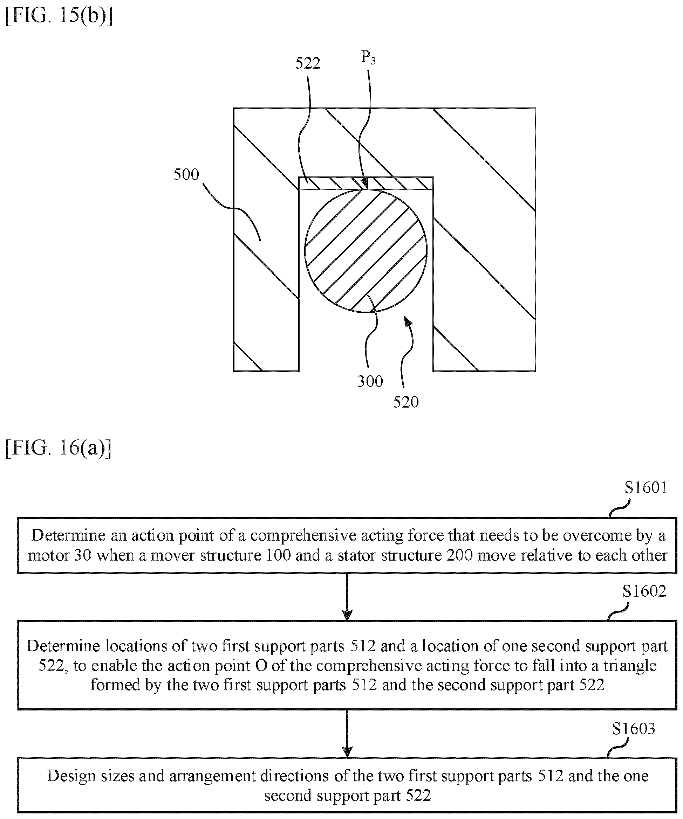

FIG. 15(b) is a partial enlargement view of an area S₂ in FIG. 13 according to an embodiment of this application. As shown in FIG. 15(b), the second sliding shaft 400 is clamped in the second sliding groove 520 on the bearing part 500, and cooperates with the peripheral surface of the first sliding shaft 300 and the groove surface of the first sliding groove 510 (that is, the support surface of the first support part 512) through the peripheral surface of the second sliding shaft 400 and the groove surface of the second sliding groove 520 (that is, the support surface of the second support part 522), to implement supporting of the first sliding shaft 300 and the second sliding shaft 400 by the bearing part 500, or implement supporting of bearing part 500 by the first sliding shaft 300 and the second sliding shaft 400. In other words, the peripheral surface of the second sliding shaft 400 at P₃ cooperates with the groove surface of the second sliding groove 520 (that is, the support surface of the second support part 522), the peripheral surface of the first sliding shaft 300 at P₁ cooperates with the groove surface of the first sliding groove 510 (that is, the support surface of the first support part 512), and the peripheral surface of the first sliding shaft 300 at P₂ cooperates with the groove surface of the first sliding groove 510 (that is, the support surface of the first support part 512), to jointly restrict separation of the first sliding shaft 300 and the second sliding shaft 400 from the bearing part 500 in any status. In conclusion, the first sliding shaft 300 cooperates with the first sliding groove 510, and the second sliding shaft 400 cooperates with the second sliding groove 520, to jointly restrict separation of the mover structure 100 from the stator structure 200 and absorb a dimension tolerance.

In some implementations of this application, the mover structure 100 and the bearing part 500 are integrally formed. In the motor 30, the mover structure 100 and the bearing part 500 are integrally formed, so that a quantity of components in the motor 30 is reduced, assembly difficulty of the motor 30 and molding difficulty of the components are reduced, assembly efficiency of the motor 30 is improved, and overall economic benefits are improved.

It may be understood that the foregoing implementation is merely a partial example of connection manners between the mover structure 100 and the bearing part 500, and another structure manner that can implement connection between the mover structure 100 and the bearing part 500 also falls within the protection scope of this application. For example: The bearing part 500 is connected to the mover structure 100. In other words, the mover structure 100 and the bearing part 500 are separately formed, and then the mover structure 100 and the bearing part 500 are assembled together. This is not specifically limited.

As shown in FIG. 14, in some implementations of this application, the first sliding shaft 300 is mounted on the stator structure 200, to enable the first sliding shaft 300 to be relatively fastened to the stator structure 200. For example, a mounting hole is disposed on the stator structure 200, and the first sliding shaft 300 penetrates through the mounting hole, to implement relative fastening between the first sliding shaft 300 and the stator structure 200.

For example, as shown in FIG. 12, FIG. 14(a), and FIG. 14(b), the stator structure 200 is a square-shaped frame structure. The first mounting part 210 is formed on the stator structure 200, and the first mounting part 210 includes a first mounting hole 211 and a second mounting hole 212 that are disposed on a pair of board structures and that are disposed opposite to each other on the stator structure 200. The first sliding shaft 300 includes a first end 310 of the first sliding shaft and a second end 320 of the first sliding shaft. The first end 310 of the first sliding shaft is mounted in the first mounting hole 211, and the second end 320 of the first sliding shaft is mounted in the second mounting hole 212.

Similarly, the second mounting part 220 is formed on the stator structure 200, and the second mounting part 220 includes a third mounting hole 221 and a fourth mounting hole 222 that are disposed on a pair of board structures and that are disposed opposite to each other on the stator structure 200. The second sliding shaft 400 includes a first end 410 of the second sliding shaft and a second end 420 of the second sliding shaft. The first end 410 of the second sliding shaft is mounted in the third mounting hole 221, and the second end 420 of the second sliding shaft is mounted in the fourth mounting hole 222. It may be understood that the first axis *l*₁ of the first sliding shaft 300 mounted on the stator structure 200 and the second axis *l*₂ of the second sliding shaft 400 mounted on the stator structure 200 are parallel to each other.

For another example, a mounting groove is disposed on the stator structure 200, and the first sliding shaft 300 is mounted in the mounting groove via a mounting part, to implement relative fastening between the first sliding shaft 300 and the stator structure 200.

In addition, it should be noted that a manner of mounting the first sliding shaft 300 on the stator structure 200 may be that one end of the first sliding shaft 300 is mounted on the stator structure 200, or two ends of the first sliding shaft 300 are mounted on the stator structure 200 separately. This is not specifically limited in this application.

In some other embodiments of this application, a motor 30 includes a mover structure 100, a stator structure 200, a first sliding shaft 300, a second sliding shaft 400, and a bearing part 500. The first sliding shaft 300 and the second sliding shaft 400 are mounted on the mover structure 100, and the stator structure 200 is connected to the bearing part 500. For a manner of mounting the first sliding shaft 300 and the second sliding shaft 400 on the mover structure 100, refer to the manner of mounting the first sliding shaft 300 and the second sliding shaft 400 on the stator structure 200 in the foregoing embodiment. For a connection manner between the bearing part 500 and the stator structure 200, refer to the connection manner between the bearing part 500 and the mover structure 100 in the foregoing embodiment. Details are not described herein again.

In some other embodiments of this application, a motor includes a mover structure, a stator structure, a first sliding shaft, a second sliding shaft, a first bearing part, and a second bearing part. A first sliding groove that adapts to the first sliding shaft is disposed on the first bearing part, and a second sliding groove that adapts to the second sliding shaft is disposed on the second bearing part. The first sliding shaft is mounted on the stator structure, the first bearing part is connected to the mover structure, the second sliding shaft is mounted on the mover structure, and the second bearing part is connected to the stator structure.

In some other embodiments of this application, a motor includes a mover structure, a stator structure, a first sliding shaft, a second sliding shaft, a first bearing part, and a second bearing part. A first sliding groove that adapts to the first sliding shaft is disposed on the first bearing part, and a second sliding groove that adapts to the second sliding shaft is disposed on the second bearing part. The first sliding shaft is mounted on the mover structure, the first bearing part is connected to the stator structure, the second sliding shaft is mounted on the stator structure, and the second bearing part is connected to the mover structure.

In some embodiments of this application, a V-shaped groove that adapts to a shape of the first sliding shaft 300 is disposed on a first support part 512, and the first support part 512 is clamped with the first sliding shaft 300 through the V-shaped groove. A U-shaped groove that adapts to a shape of the second sliding shaft 400 is disposed on the second support part 522. The second support part 522 is clamped with the second sliding shaft 400 through the U-shaped groove. It may be understood that an outline of a groove body on the first support part 512 and an outline of a groove body on the second support part 522 are merely some examples, and any other groove body on the first support part 512 and the groove body on the second support part 522 that can implement a corresponding function also fall within the protection scope of this application. This is not specifically limited in this application. When the V-shaped groove that adapts to the shape of the first sliding shaft 300 is disposed on the first support part 512, a support surface of the first support part 512 is a V-shaped groove surface. When the U-shaped groove that adapts to the shape of the second sliding shaft 400 is disposed on the second support part 522, a support surface of the second support part 522 is a U-shaped groove surface.

In some embodiments of this application, a three-point shaft-holding design is semi-opened. A design manner of the two first support parts 512 and the one second support part 522 is flexible, and design difficulty is low.

In some embodiments of this application, an action point of a comprehensive acting force that needs to be overcome in a running process of the motor 30 is located in a triangle area formed by the two first support parts 512 and the one second support part 522. The comprehensive acting force is an acting force that needs to be overcome when a drive structure in the motor 30 drives the mover structure 100 to move relative to the stator structure 200.

A manner of determining the triangle area based on the two first support parts 512 and the one second support part 522 may be: integrating each first support part 512 as one first support point (for example, the point A or the point B in FIG. 9), integrating the second support part 522 as one second support point (for example, the point C in FIG. 9), and subsequently forming the triangle area based on the two first support points and the one second support point.

In some implementations of this application, the two first support points and the one second support point are used as three vertices to form the triangle area.

In some other alternative implementations of this application, a projection plane is determined, the two first support points and the one second support point are projected onto the projection plane to obtain three projected points, and then the three projected points are used as three vertices to form the triangle area. The projection plane may be a coplanar plane of the first axis *l*₁ of the first sliding shaft 300 and the second axis *l*₂ of the second sliding shaft 400, or the projection plane may be a parallel plane of a coplanar plane of the first axis *l*₁ of the first sliding shaft 300 and the second axis *l*₂ of the second sliding shaft 400 (for example, Sₚ in FIG. 11). Projections of the two first support points and the one second support point onto the projection plane may be orthographic projections of the two first support points and the one second support point onto the projection plane. This is not specifically limited in this application.

The following briefly describes several technical solutions of integrating one first support point based on the first support part 512 and integrating one second support point based on the second support part 522.

In some embodiments of this application, an integration solution in which one first support point is integrated based on the first support part 512 may be: Two strip areas in which the first support part 512 is in contact with the first sliding shaft 300 are determined, and the two strip areas are integrated into two line segments. Subsequently, a central line segment that is coplanar with the two line segments and whose distances from any point of the central line segment to the two line segments are equal is determined based on the two line segments. A point on the central line segment may be used as the first support point. For example, an endpoint or a midpoint on the central line segment may be used as the first support point.

In some implementations of this application, a manner of integrating a strip area into a line segment may be using a center line of the strip area as an integrated line segment. It may be understood that, when molding precision and assembly precision are ensured, the two integrated line segments are straight line segments parallel to the first axis *l*₁ of the first sliding shaft 300. One line segment obtained after integration is a straight line segment that passes through P₁ and is parallel to the first axis *l*₁ of the first sliding shaft 300. The other line segment obtained after integration is a straight line segment that passes through P₂ and that is parallel to the first axis *l*₁ of the first sliding shaft 300.

In some other embodiments of this application, an integration solution in which one first support point is integrated based on the first support part 512 may be: Intersection points at which two end faces of the first support part 512 intersect with the first axis *l*₁ of the first sliding shaft 300 are separately determined. A line segment between the two intersection points is an integrated line segment corresponding to the first support part 512, and a point on the integrated line segment may be used as the first support point. For example, an endpoint or a midpoint on the integrated line segment may be used as the first support point.

In some embodiments of this application, an integration solution in which one second support point is integrated based on the second support part 522 may be: Intersection points at which two end faces of the second support part 522 intersect with the second axis *l*₂ of the second sliding shaft 400 are separately determined. A line segment between the two intersection points is an integrated line segment corresponding to the second support part 522, and a point on the integrated line segment may be used as the second support point. For example, an endpoint or a midpoint on the integrated line segment may be used as the second support point.

In addition, a manner of determining the triangle area based on the two first support parts 512 and the one second support part 522 may further be: using a center or a gravity center of each first support part 512 as one first support point (for example, the point A or the point B in FIG. 9), using a center or a gravity center of the second support part 522 as one second support point (for example, the point C in FIG. 9), and subsequently forming the triangle area based on the two first support points and the one second support point.

It may be understood that the foregoing manners of determining the triangle area based on the two first support parts 512 and the one second support part 522 are merely examples, and a manner of determining the triangle area in another form also falls within the protection scope of this application. This is not specifically limited in this application.

In some implementations of this application, the action point of the comprehensive acting force that needs to be overcome in the running process of the motor 30 may be an actual location at which the comprehensive acting force acts on the motor 30. In some other alternative implementations of this application, the action point of the comprehensive acting force that needs to be overcome in the running process of the motor 30 may be a projection location, on a projection plane, of an actual location at which the comprehensive acting force acts on the motor 30.

For example, the comprehensive acting force may be gravity of the mover structure 100, gravity of another component (for example, a lens 10 and a lens carrier) connected to the mover structure 100, a magnetic attraction force between the mover structure 100 and the stator structure 200, and a combined force of a friction force between the mover structure 100 and another component. It may be understood that the foregoing is merely some implementations of the comprehensive acting force in this embodiment of this application, and the comprehensive acting force may alternatively be represented in another form. This is not specifically limited in this application.

In some embodiments of this application, the action point of the comprehensive acting force coincides with a center of the triangle area formed by the two first support parts 512 and the one second support part 522.

In some embodiments of this application, distances from any first support part 512 to the second support part 522 are equal. In other words, the two first support parts 512 are symmetrically distributed on the first groove body 511 relative to the second support part 522.

In some embodiments of this application, a material of the bearing part 500 is any one of stainless steel, liquid crystal polymer (Liquid Crystal Polymer, LCP), polycarbonate (Polycarbonate, PC), or polyamide (Polyamide, PA). PA is commonly referred to as nylon. In some implementations of this application, a material model of the LCP may be CM529b.

In some embodiments of this application, a size range of the first support part 512 in a direction of the first axis *l*₁ is 0.8 mm to 1 mm. For example, a size of the first support part 512 in the direction of the first axis *l*₁ is 0.95 mm.

In some embodiments of this application, a size range of the second support part 522 in a direction of the second axis /₂ is 0.7 mm to 0.9 mm. For example, a size of the second support part 522 in the direction of the second axis *l*₂ is 0.80 mm.

In some embodiments of this application, the motor 30 further includes a drive structure. The drive structure is configured to drive the mover structure 100 to move relative to the stator structure 200.

In some implementations of this application, a base of the drive structure is disposed on the stator structure 200, and a drive end of the drive structure is connected to the mover structure 100. When the drive structure is in a working status, under cooperation of the first sliding shaft 300, the second sliding shaft 400, and the bearing part 500, the drive end of the drive structure drives the mover structure 100 to move relative to the stator structure 200, that is, implement relative movement between the lens 10 and an optical sensing component 20, and further implement focusing and resetting of a camera module 14.

For example, the drive structure may be an electromagnetic drive structure. The drive structure includes a focusing coil and a magnet set. The magnet set creates a stable magnetic field. The focusing coil is relatively fixed to the stator structure 200, and is located in the magnetic field created by the magnet set. In a power-on state, the magnetic field is created inside the focusing coil, and the magnetic field interacts with the magnet set to generate a driving force. Under an action of the driving force, the focusing coil drives the mover structure 100 to move relative to the stator structure 200, to implement relative movement of the lens 10 relative to the optical sensing component 20, and finally complete focusing and resetting of the camera module 14.

For another example, the drive structure may be an electromagnetic drive structure. The drive structure includes a focusing coil and a magnet set. The magnet set creates a stable magnetic field. The focusing coil is relatively fixed to the mover structure 100, and is located in the magnetic field created by the magnet set. In a power-on state, the magnetic field is created inside the focusing coil, and the magnetic field interacts with the magnet set to generate a driving force. Under an action of the driving force, the focusing coil drives the mover structure 100 to move relative to the stator structure 200, to implement relative movement of the lens 10 relative to the optical sensing component 20, and finally complete focusing and resetting of the camera module 14.

It may be understood that the foregoing implementations are merely some examples of the drive structure, and a structure and a connection manner of another form of the drive structure also fall within the protection scope of this application. This is not specifically limited in this application.

In some other embodiments of this application, the motor 30 further includes a housing. In some implementations of this application, a buffer component is further disposed between the housing and the mover structure 100, to prevent the mover structure 100 from colliding with the housing in the running process of the motor 30, so as to reduce abnormal sound and improve user experience.

In addition, this application further provides a camera module 14. As shown in FIG. 2, in some embodiments of this application, the camera module 14 includes a lens 10, an optical sensing component 20, and any one of the foregoing motors 30. The lens 10 is connected to the mover structure 100 in the motor 30, and the optical sensing component 20 is connected to the stator structure 200 in the motor 30. Alternatively, the lens 10 is connected to the stator structure 200 in the motor 30, and the optical sensing component 20 is connected to the mover structure 100 in the motor 30.

In addition, this application further provides an electronic device. In some embodiments of this application, the electronic device includes any one of the foregoing camera modules 14. For example, the electronic device is a mobile phone 1. As shown in FIG. 2, in some embodiments of this application, the mobile phone 1 includes a screen 11, a middle frame 12, a rear cover 13, and a camera module 14. The screen 11, the middle frame 12, and the rear cover 13 are sequentially disposed along a negative direction of a Z axis. The screen 11, the middle frame 12, and the rear cover 13 jointly form a mounting cavity (not shown). The camera module 14 is located in the mounting cavity, and is mounted on at least one of the screen 11, the middle frame 12, and the rear cover 13. It may be understood that the foregoing implementations are merely some examples of a specific structure of the mobile phone 1, and another mobile phone 1 including the camera module 14 also falls within the protection scope of this application. This is not specifically limited.

In addition, this application further provides a design method of a bearing part 500. FIG. 16(a) is a flowchart of a design method of a bearing part 500 according to some embodiments of this application. As shown in FIG. 16(a), the design method of the bearing part 500 in this application includes the following steps.

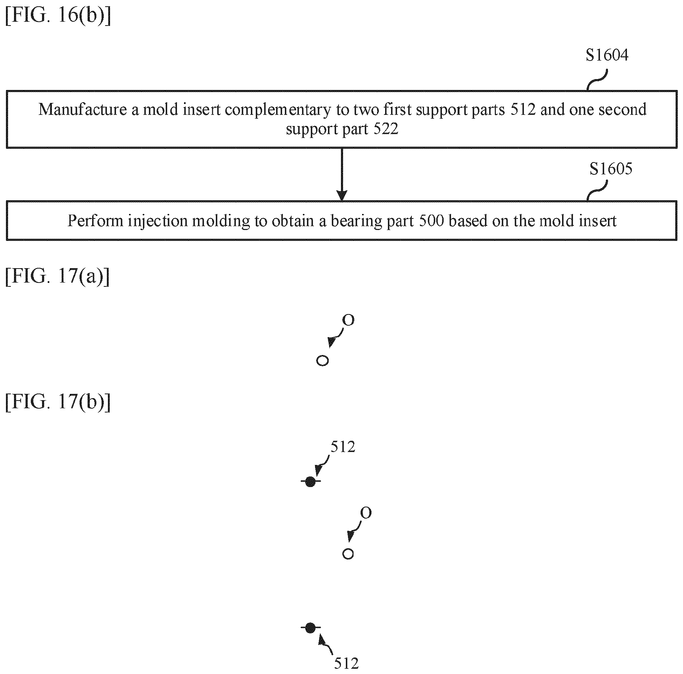

S1601: Determine an action point O of a comprehensive acting force that needs to be overcome by a motor 30 when a mover structure 100 and a stator structure 200 move relative to each other, as shown in FIG. 17(a).

FIG. 17 (a) shows the action point O of the comprehensive acting force according to an embodiment of this application.

The comprehensive acting force is an acting force that needs to be overcome when a drive structure in the motor 30 drives the mover structure 100 to move relative to the stator structure 200.

For example, the comprehensive acting force may be gravity of the mover structure 100, gravity of another component (for example, a lens 10 and a lens carrier) connected to the mover structure 100, a magnetic attraction force between the mover structure 100 and the stator structure 200, and a combined force of a friction force between the mover structure 100 and another component. It may be understood that the foregoing is merely some implementations of the comprehensive acting force in this embodiment of this application, and the comprehensive acting force may alternatively be represented in another form. This is not specifically limited in this application.

In some embodiments of this application, a first sliding shaft 300 (or a second sliding shaft 400) is a magnetic conductive part, a magnet is disposed around the first sliding shaft 300 (or the second sliding shaft 400), and the magnet is relatively fixed to the mover structure 100. Relative stability between the mover structure 100 and the first sliding shaft 300 (or the second sliding shaft 400) is maintained as much as possible based on a Lorentz force between the first sliding shaft 300 (or the second sliding shaft 400) and the magnet. It may be understood that the Lorentz force between the first sliding shaft 300 (or the second sliding shaft 400) and the magnet is a magnetic attraction force between the mover structure 100 and the stator structure 200.

It is not difficult to find that when the mover structure 100 moves along the first sliding shaft 300 (or the second sliding shaft 400), a relative location of the mover structure 100 and the first sliding shaft 300 (or the second sliding shaft 400) changes. In other words, a relative location of the magnet and the first sliding shaft 300 (or the second sliding shaft 400) changes. In general, magnetic fields formed by magnets cannot be consistent. Therefore, in some embodiments of this application, the motor 30 further includes a magnetic conductive sheet. The magnetic conductive sheet is arranged near the magnet, and is configured to equalize the magnetic field formed by the magnet, to maintain stability of the magnetic attraction force in various relative locations of the magnet and the first sliding shaft 300 (or the second sliding shaft 400). Therefore, the foregoing technical solution can further improve stability of the comprehensive acting force that needs to be overcome by the motor 30, improve running stability of the motor 30, and improve stability of the camera module 14 in the running process.

A material of the magnetic conductive sheet is not specifically limited in this application, and may be Spcc or sus430. This is not specifically limited in this application.

The action point O is an equivalent location at which the comprehensive acting force acts on the bearing part 500 when the comprehensive acting force acts on the bearing part 500. In some implementations of this application, the comprehensive acting force and the action point O of the comprehensive acting force may be obtained according to a simulation method. Details are not described herein.

S1602: Determine locations of two first support parts 512 and a location of one second support part 522, to enable the action point O of the comprehensive acting force to fall into a triangle formed by the two first support parts 512 and the second support part 522.

In some embodiments of this application, a specific solution for determining the locations of the two first support parts 512 and the location of the one second support part 522 may be as follows: First, a first groove body 511 and a second groove body 521 are determined. Subsequently, the two first support parts 512 are determined on the first groove body 511, and the one second support part 522 is determined on the second groove body 521, to enable the action point of the comprehensive acting force fall into a triangle formed by the two first support parts 512 and the second support part 522.

In some other embodiments of this application, a specific solution for determining the locations of the two first support parts 512 and the location of the one second support part 522 may be as follows: First, the two first support parts 512 and the one second support part 522 are determined, to enable the action point of the comprehensive acting force fall into a triangle formed by the two first support parts 512 and the second support part 522. Subsequently, a first groove body 511 is determined based on the two first support parts 512, and a second groove body 521 is determined based on an extension direction of the first groove body 511 and the second support part 522.

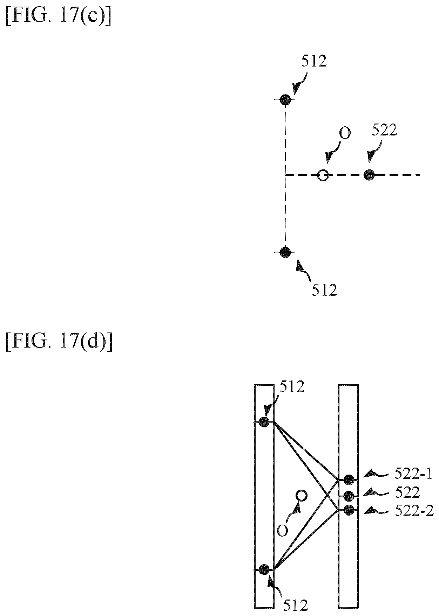

FIG. 17 (b) is a diagram of a design solution of the first support part 512 according to an embodiment of this application. FIG. 17 (c) is a diagram of a design solution of the second support part 522 according to an embodiment of this application. FIG. 17 (d) is a diagram of a design solution of the bearing part 500 according to an embodiment of this application. The following describes in detail a molding solution of the bearing part 500 with reference to FIG. 17(b) to FIG. 17(d).

For example, the locations of the two first support parts 512 are first determined, as shown in FIG. 17(b). Subsequently, the second support part 522 is disposed on a vertical line connecting the action point of the comprehensive acting force to a line connecting the two first support parts 512, as shown in FIG. 17(c). The second support part 522 may be disposed within a specific range. For example, the second support part 522 may be disposed in a range in which the action point of the comprehensive acting force moves outward by ±0.5 mm to both sides (for example, 522-1 and 522-2 in FIG. 17(d)) on two sides, and a round corner of 0.05 mm is made, as shown in FIG. 17(d).

S1603: Design sizes and arrangement directions of the two first support parts 512 and the one second support part 522.

For example, a bearing width of the second support part 522 is 0.95 mm, and a round corner of 0.08 mm is made. The bearing width of the second support part 522 is a dimension of the second support part 522 along the second axis *l*₂.

It may be understood that after the design of the first support part 512 and the second support part 522 is completed, this application further provides a method for processing the bearing part 500. FIG. 16(b) is a flowchart of a processing method of the bearing part 500 according to some embodiments of this application. As shown in FIG. 16(b), the processing method of the bearing part 500 in this application includes the following steps.

S1604: Manufacture a mold insert complementary to the two first support parts 512 and the one second support part 522.

S1605: Perform injection molding to obtain the bearing part 500 based on the mold insert. For example, the mold insert and an LCP whose model is CM529b are used for injection molding to form a plastic part, that is, the bearing part 500.

It should be noted that, in this specification, similar reference numerals and letters in the following accompanying drawings represent similar items. Therefore, once an item is defined in an accompanying drawing, the item does not need to be further defined or interpreted in the following accompanying drawings.

The foregoing describes implementations of this application in specific embodiments, and other advantages and effects of this application may be readily understood by a person skilled in the art from content disclosed in this specification. Although this application is described with reference to some embodiments, it does not mean that a characteristic of this application is limited only to this implementation. On the contrary, a purpose of describing this application with reference to an implementation is to cover another option or modification that may be derived based on claims of this application. To provide an in-depth understanding of this application, the following descriptions include a plurality of specific details. This application may be alternatively implemented without using these details. In addition, to avoid confusion or blurring a focus of this application, some specific details are omitted from the description. It should be noted that embodiments in this application and the features in embodiments may be mutually combined in the case of no conflict.

In the description of this application, it should be noted that locations or location relationships indicated by terms "center", "vertical", "horizontal", "outside", "inside", "a peripheral direction", "a radical direction", and "an axial direction" and the like are based on locations or location relationships shown in the accompanying drawings, and are merely intended for ease of describing this application and simplifying descriptions, instead of indicating or implying that a mentioned apparatus or component needs to be provided on a specific location or constructed and operated on a specific location, and therefore shall not be understood as limitations on this application.

In descriptions of this application, it should be noted that unless otherwise explicitly specified and limited, terms such as "dispose", "mount", "connect", and "attach" should be understood in a broad sense. For example, such terms may indicate a fixed connection, a detachable connection, or an integral connection, may indicate a mechanical connection or an electrical connection, and may indicate a direct connection, an indirect connection through an intermediate medium, or an internal communication between two elements. A person of ordinary skill in the art may interpret specific meanings of the foregoing terms in this application according to specific cases.

In the descriptions of this application, the term "include", "comprise", or any other variant thereof is intended to cover a non-exclusive inclusion, so that a process, a method, an article, or a device that includes a series of elements not only includes those elements, but also includes another element that is not explicitly listed, or also includes an element that is inherent to the process, the method, the article, or the device. An element preceded by "includes a..." does not, without more constraints, preclude the presence of additional identical elements in the process, method, article, or device that includes the element.

It is clearly that a person skilled in the art can make various modifications and variations to this application without departing from the scope of this application as defined by the claims. This application is intended to cover these modifications and variations of this application provided that they fall within the scope of protection defined by the claims of this application.

## Claims

1. A motor (30), wherein the motor (30) comprises:
a mover structure (100);
a stator structure (200);
a first sliding shaft (300);
a second sliding shaft (400), wherein a second axis of the second sliding shaft (400) is parallel to a first axis of the first sliding shaft (300); and
a bearing part (500), wherein the bearing part (500) is connected to the mover structure (100), and the first sliding shaft (300) and the second sliding shaft (400) are connected to the stator structure (200); or the bearing part (500) is connected to the stator structure (200), and the first sliding shaft (300) and the second sliding shaft (400) are connected to the mover structure (100),
wherein
two first support parts (512) that adapt to the first sliding shaft (300) are disposed on the bearing part (500), and the first sliding shaft (300) is clamped in the two first support parts (512), to restrict relative motion directions of the mover structure (100) and the stator structure (200); and
one second support part (522) that adapts to the second sliding shaft (400) is further disposed on the bearing part (500), and the second sliding shaft (400) is clamped in the second support part (522) on the bearing part (500), to restrict separation of the mover structure (100) from the stator structure (200).

2. The motor (30) according to claim 1, wherein a V-shaped groove that adapts to a shape of the first sliding shaft (300) is disposed on the first support part (512), and a U-shaped groove that adapts to a shape of the second sliding shaft (400) is disposed on the second support part (522).

3. The motor (30) according to claim 1 or 2, wherein an action point of a comprehensive acting force that needs to be overcome in a running process of the motor (30) is located in a triangle area formed by the two first support parts (512) and the one second support part (522).

4. The motor (30) according to claim 3, wherein the comprehensive acting force is a combined force of gravity of the mover structure (100) and a magnetic attraction force between the mover structure (100) and the stator structure (200).

5. The motor (30) according to claim 3 or 4, wherein the action point of the comprehensive acting force coincides with a center of the triangle area formed by the two first support parts (512) and the one second support part (522).

6. The motor (30) according to any one of claims 1 to 5, wherein a material of the bearing part (500) is any one of stainless steel, liquid crystal polymer, polycarbonate, or polyamide.

7. A motor (30), wherein the motor (30) comprises:
a mover structure (100);
a stator structure (200);
a first sliding shaft (300);
a second sliding shaft (400), wherein a second axis of the second sliding shaft (400) is parallel to a first axis of the first sliding shaft (300); and
a bearing part (500), wherein the bearing part (500) comprises a first bearing part and a second bearing part, wherein
the first bearing part is connected to the mover structure (100), the first sliding shaft (300) is connected to the stator structure (200), the second bearing part is connected to the stator structure (200), and the second sliding shaft (400) is connected to the mover structure (100); or the first bearing part is connected to the stator structure (200), the first sliding shaft (300) is connected to the mover structure (100), the second bearing part is connected to the mover structure (100), and the second sliding shaft (400) is connected to the stator structure (200);
two first support parts (512) that adapt to the first sliding shaft (300) are disposed on the first bearing part, and the first sliding shaft (300) is clamped in the two first support parts (512), to restrict relative motion directions of the mover structure (100) and the stator structure (200); and
one second support part (522) that adapts to the second sliding shaft (400) is disposed on the second bearing part, and the second sliding shaft (400) is clamped in the second support part (522) on the bearing part (500), to restrict separation of the mover structure (100) from the stator structure (200).

8. The motor (30) according to claim 7, wherein a V-shaped groove that adapts to a shape of the first sliding shaft (300) is disposed on the first support part (512), and a U-shaped groove that adapts to a shape of the second sliding shaft (400) is disposed on the second support part (522).

9. A camera module (14), wherein the camera module (14) comprises a lens (10), an optical sensing component (20), and the motor (30) according to any one of claims 1 to 8, wherein the lens (10) is connected to the mover structure (100) in the motor (30), and the optical sensing component (20) is connected to the stator structure (200) in the motor (30); or the lens (10) is connected to the stator structure (200) in the motor (30), and the optical sensing component (20) is connected to the mover structure (100) in the motor (30).

10. An electronic device, wherein the electronic device comprises the camera module (14) according to claim 9.

## Patentansprüche

1. Motor (30), wobei der Motor (30) Folgendes umfasst:
eine Läuferstruktur (100);
eine Statorstruktur (200);
eine erste Gleitwelle (300);
eine zweite Gleitwelle (400), wobei eine zweite Achse der zweiten Gleitwelle (400) parallel zu einer ersten Achse der ersten Gleitwelle (300) verläuft; und
ein Lagerteil (500), wobei das Lagerteil (500) mit der Läuferstruktur (100) verbunden ist und die erste Gleitwelle (300) und die zweite Gleitwelle (400) mit der Statorstruktur (200) verbunden sind; oder das Lagerteil (500) mit der Statorstruktur (200) verbunden ist und die erste Gleitwelle (300) und die zweite Gleitwelle (400) mit der Läuferstruktur (100) verbunden sind, wobei
zwei an die erste Gleitwelle (300) angepasste erste Stützteile (512) an dem Lagerteil (500) angeordnet sind und die erste Gleitwelle (300) in den zwei ersten Stützteilen (512) eingespannt ist, um Richtungen einer Relativbewegung der Läuferstruktur (100) und der Statorstruktur (200) einzuschränken; und ferner ein an die zweite Gleitwelle (400) angepasstes zweites Stützteil (522) an dem Lagerteil (500) angeordnet ist und die zweite Gleitwelle (400) in dem zweiten Stützteil (522) an dem Lagerteil (500) eingespannt ist, um eine Trennung der Läuferstruktur (100) von der Statorstruktur (200) einzuschränken.

2. Motor (30) nach Anspruch 1, wobei an dem ersten Stützteil (512) eine an eine Form der ersten Gleitwelle (300) angepasste V-förmige Nut angeordnet ist und an dem zweiten Stützteil (522) eine an eine Form der zweiten Gleitwelle (400) angepasste U-förmige Nut angeordnet ist.

3. Motor (30) nach Anspruch 1 oder 2, wobei ein Angriffspunkt einer resultierenden Kraft, die bei einem Betrieb des Motors (30) überwunden werden muss, in einem durch die zwei ersten Stützteile (512) und das eine zweite Stützteil (522) gebildeten Dreiecksbereich liegt.

4. Motor (30) nach Anspruch 3, wobei die resultierende Kraft eine aus einer Gewichtskraft der Läuferstruktur (100) und einer magnetischen Anziehungskraft zwischen der Läuferstruktur (100) und der Statorstruktur (200) zusammengesetzte Kraft ist.

5. Motor (30) nach Anspruch 3 oder 4, wobei der Angriffspunkt der resultierenden Kraft mit einem Mittelpunkt des durch die zwei ersten Stützteile (512) und das eine zweite Stützteil (522) gebildeten Dreiecksbereichs zusammenfällt.

6. Motor (30) nach einem der Ansprüche 1 bis 5, wobei ein Material des Lagerteils (500) eines der folgenden Materialien ist: Edelstahl, Flüssigkristallpolymer, Polycarbonat oder Polyamid.

7. Motor (30), wobei der Motor (30) Folgendes umfasst:
eine Läuferstruktur (100);
eine Statorstruktur (200);
eine erste Gleitwelle (300);
eine zweite Gleitwelle (400), wobei eine zweite Achse der zweiten Gleitwelle (400) parallel zu einer ersten Achse der ersten Gleitwelle (300) verläuft; und
ein Lagerteil (500), wobei das Lagerteil (500) ein erstes Lagerteil und ein zweites Lagerteil umfasst, wobei
das erste Lagerteil mit der Läuferstruktur (100) verbunden ist, die erste Gleitwelle (300) mit der Statorstruktur (200) verbunden ist, das zweite Lagerteil mit der Statorstruktur (200) verbunden ist und die zweite Gleitwelle (400) mit der Läuferstruktur (100) verbunden ist; oder das erste Lagerteil mit der Statorstruktur (200) verbunden ist, die erste Gleitwelle (300) mit der Läuferstruktur (100) verbunden ist, das zweite Lagerteil mit der Läuferstruktur (100) verbunden ist und die zweite Gleitwelle (400) mit der Statorstruktur (200) verbunden ist;
zwei an die erste Gleitwelle (300) angepasste erste Stützteile (512) an dem ersten Lagerteil angeordnet sind und die erste Gleitwelle (300) in den zwei ersten Stützteilen (512) eingespannt ist, um Richtungen einer Relativbewegung der Läuferstruktur (100) und der Statorstruktur (200) einzuschränken; und ein an die zweite Gleitwelle (400) angepasstes zweites Stützteil (522) an dem zweiten Lagerteil angeordnet ist und die zweite Gleitwelle (400) in dem zweiten Stützteil (522) an dem Lagerteil (500) eingespannt ist, um eine Trennung der Läuferstruktur (100) von der Statorstruktur (200) einzuschränken.

8. Motor (30) nach Anspruch 7, wobei an dem ersten Stützteil (512) eine an eine Form der ersten Gleitwelle (300) angepasste V-förmige Nut angeordnet ist und an dem zweiten Stützteil (522) eine an eine Form der zweiten Gleitwelle (400) angepasste U-förmige Nut angeordnet ist.

9. Kameramodul (14), wobei das Kameramodul (14) eine Linse (10), eine optische Sensorkomponente (20) und den Motor (30) nach einem der Ansprüche 1 bis 8 umfasst, wobei die Linse (10) mit der Läuferstruktur (100) in dem Motor (30) verbunden ist und die optische Sensorkomponente (20) mit der Statorstruktur (200) in dem Motor (30) verbunden ist; oder die Linse (10) mit der Statorstruktur (200) in dem Motor (30) verbunden ist und die optische Sensorkomponente (20) mit der Läuferstruktur (100) in dem Motor (30) verbunden ist.

10. Elektronische Vorrichtung, wobei die elektronische Vorrichtung das Kameramodul (14) nach Anspruch 9 umfasst.

## Revendications

1. Moteur (30), dans lequel le moteur (30) comprenant :
une structure mobile (100) ;
une structure de stator (200) ;
un premier arbre coulissant (300) ;
un deuxième arbre coulissant (400), un deuxième axe du deuxième arbre coulissant (400) étant parallèle à un premier axe du premier arbre coulissant (300) ; et
une partie d'appui (500), la partie d'appui (500) étant reliée à la structure mobile (100), et le premier arbre coulissant (300) et le deuxième arbre coulissant (400) étant reliés à la structure de stator (200) ; ou la partie d'appui (500) étant reliée à la structure de stator (200), et le premier arbre coulissant (300) et le deuxième arbre coulissant (400) étant reliés à la structure mobile (100), dans lequel
deux premières parties de support (512) qui s'adaptent au premier arbre coulissant (300) sont disposées sur la partie d'appui (500), et le premier arbre coulissant (300) est serré dans les deux premières parties de support (512), afin de limiter des directions de mouvement relatives de la structure mobile (100) et de la structure de stator (200) ; et une deuxième partie de support (522) qui s'adapte au deuxième arbre coulissant (400) est en outre disposée sur la partie d'appui (500), et le deuxième arbre coulissant (400) est serré dans la deuxième partie de support (522) sur la partie d'appui (500), afin de limiter la séparation de la structure mobile (100) de la structure de stator (200).

2. Moteur (30) selon la revendication 1, dans lequel une rainure en forme de V qui s'adapte à une forme du premier arbre coulissant (300) est disposée sur la première partie de support (512), et une rainure en forme de U qui s'adapte à une forme du deuxième arbre coulissant (400) est disposée sur la deuxième partie de support (522).

3. Moteur (30) selon la revendication 1 ou 2, dans lequel un point d'action d'une force d'action globale qui doit être surmontée dans un processus de fonctionnement du moteur (30) est situé dans une zone triangulaire formée par les deux premières parties de support (512) et la deuxième partie de support (522).

4. Moteur (30) selon la revendication 3, dans lequel la force d'action globale est une force de gravité de la structure mobile (100) et une force d'attraction magnétique entre la structure mobile (100) et la structure de stator (200) combinées.

5. Moteur (30) selon la revendication 3 ou 4, dans lequel le point d'action de la force d'action globale coïncide avec un centre de la zone triangulaire formée par les deux premières parties de support (512) et la deuxième partie de support (522).

6. Moteur (30) selon l'une quelconque des revendications 1 à 5, dans lequel un matériau de la partie d'appui (500) est l'un quelconque parmi de l'acier inoxydable, un polymère à cristaux liquides, du polycarbonate ou du polyamide.

7. Moteur (30), dans lequel le moteur (30) comprenant :
une structure mobile (100) ;
une structure de stator (200) ;
un premier arbre coulissant (300) ;
un deuxième arbre coulissant (400), un deuxième axe du deuxième arbre coulissant (400) étant parallèle à un premier axe du premier arbre coulissant (300) ; et
une partie d'appui (500), la partie d'appui (500) comprenant une première partie d'appui et une deuxième partie d'appui, dans lequel
la première partie d'appui est reliée à la structure mobile (100), le premier arbre coulissant (300) est relié à la structure de stator (200), la deuxième partie d'appui est reliée à la structure de stator (200), et le deuxième arbre coulissant (400) est relié à la structure mobile (100) ; ou la première partie d'appui est reliée à la structure de stator (200), le premier arbre coulissant (300) est relié à la structure mobile (100), la deuxième partie d'appui est reliée à la structure mobile (100), et le deuxième arbre coulissant (400) est relié à la structure de stator (200) ;
deux premières parties de support (512) qui s'adaptent au premier arbre coulissant (300) sont disposées sur la première partie d'appui, et le premier arbre coulissant (300) est serré dans les deux premières parties de support (512), afin de limiter les directions de mouvement relatives de la structure mobile (100) et de la structure de stator (200) ; et une deuxième partie de support (522) qui s'adapte au deuxième arbre coulissant (400) est disposée sur la deuxième partie d'appui, et le deuxième arbre coulissant (400) est serré dans la deuxième partie de support (522) sur la partie d'appui (500), afin de limiter la séparation de la structure mobile (100) de la structure de stator (200).

8. Moteur (30) selon la revendication 7, dans lequel une rainure en forme de V qui s'adapte à une forme du premier arbre coulissant (300) est disposée sur la première partie de support (512), et une rainure en forme de U qui s'adapte à une forme du deuxième arbre coulissant (400) est disposée sur la deuxième partie de support (522).

9. Module de caméra (14), dans lequel le module de caméra (14) comprend une lentille (10), un composant de détection optique (20), et le moteur (30) selon l'une quelconque des revendications 1 à 8, la lentille (10) étant reliée à la structure mobile (100) dans le moteur (30), et le composant de détection optique (20) étant relié à la structure de stator (200) dans le moteur (30) ; ou la lentille (10) étant reliée à la structure de stator (200) dans le moteur (30), et le composant de détection optique (20) étant relié à la structure mobile (100) dans le moteur (30).

10. Dispositif électronique, dans lequel le dispositif électronique comprend le module de caméra (14) selon la revendication 9.
